# EUROPEAN PATENT SPECIFICATION

(11) **EP 3 568 343 B1**
(45) Date of publication and mention of the grant of the patent: **11.03.2020**
(21) Application number: 18704297.3
(22) Date of filing: 12.01.2018
(51) Int. Cl.: B62M 6/45

(54) **ADAPTIVE SYSTEM FOR CONTROLLING A PEDAL-ASSISTED BICYCLE AND RESPECTIVE METHOD FOR DRIVING AN ELECTRIC MOTOR OF A BICYCLE**
ADAPTIVES SYSTEM ZUR STEUERUNG EINES PEDALUNTERSTÜTZTEN FAHRRADS UND ZUGEHÖRIGES VERFAHREN ZUR ANSTEUERUNG EINES ELEKTROMOTORS EINES FAHRRADS
SYSTÈME ADAPTATIF DE COMMANDE DE BICYCLETTE À ASSISTANCE AU PÉDALAGE ET PROCÉDÉ RESPECTIF D'ENTRAÎNEMENT D'UN MOTEUR ÉLECTRIQUE D'UNE BICYCLETTE

(30) Priority: 13.01.2017 IT 201700003184
(43) Date of publication of application: 20.11.2019
(73) Proprietor: ZEHUS S.p.A., 20122 Milan (IT)
(72) Inventor: BERRETTA, Daniele, 20122 Milano (IT); LISANTI, Paolo, 20122 Milano (IT); SEGATO, Marcello, 20122 Milano (IT); CORNO, Matteo, 20122 Milano (IT); SAVARESI, Sergio Matteo, 20122 Milano (IT)
(74) Representative: Penza, Giancarlo
(86) International application number: PCT/IB2018/050202
(87) International publication number: WO 2018/130982

(56) References cited:
- EP-A1- 3 009 295

## Description

### Technical field of the invention

The present invention concerns the field of pedal-assisted bicycles, that is a particular type of bicycle equipped with an electric motor that is suitable for supplying additional power with respect to that provided by the cyclist.

The present invention finds particular, but not exclusive application in the field of the so-called "all-in-the-wheel" pedal-assisted bicycles, that is bicycles in which the motor, batteries, sensors and electronic controls are inserted in a single housing associated with a wheel of the bicycle.

In particular, the present invention concerns a system for controlling an adaptive type of pedal-assisted bicycle, that is a pedal-assisted bicycle that is capable of modifying the control logic thereof as a function of current conditions.

### Prior art

EP3009295 discloses the preamble of claim 1.

Various control algorithms are known in the field of pedal-assisted bicycles and they principally differ in the aims they intend to achieve. For example, some algorithms prioritize the comfort of the cyclist over battery duration, whereas others aim instead at increasing the autonomy per charge, a result that is essentially achieved by means of regenerative braking by the motor, which in these circumstances operates as a generator that recharges the battery, thus increasing the effort required of the cyclist in some stages of motion.

Also proposed are algorithms that are such that the batteries of pedal-assisted bicycles in principle never need to be recharged by an external source and that thus use the pedal power provided by the cyclist to ensure an ideally infinite charge.

An algorithm of this type is disclosed for example in patent WO 2013/124764 A1; in addition to regeneration during downhill travel and braking, to recharge the battery, this algorithm uses the pedalling of the cyclist, whose effort is modified based on the resisting forces acting upon the bicycle so that part of the pedal power exerted is used to recharge the batteries.

However, although it is efficient in terms of the duration of the battery, this algorithm does not ensure adequate comfort for the cyclist.

### Summary of the invention

The issue underlying the present invention is thus that of providing a system for controlling a pedal-assisted bicycle which allows to maintain the battery charge without the aid of external sources and which reduces the overall effort of the cyclist compared to a conventional bicycle.

This and others aims are achieved by an adaptive control system for controlling a pedal-assisted bicycle according to claim 1.

The control system according to the invention optimizes the synergy between the cyclist and the behaviour of an electric bicycle equipped with the control system.

Moreover, the control system according to the invention does not require the presence of a pedal torque sensor for its operation.

Dependent claims 2 to 8 define possible advantageous embodiments of the invention.

It is also an object of the present invention a pedal-assisted bicycle as defined in the enclosed claim 9.

It is also an object of the present invention a method for driving an electric motor of an electrically pedal-assisted bicycle by means of a rechargeable battery as defined in the enclosed claim 10 and in the preferred embodiments disclosed in the dependent claims 11 to 14.

The method for driving the electric motor comprises the steps of:
a1) calculating the value of an inversion speed as a function of a state of charge of a battery, said inversion speed indicating the bicycle speed beneath which the electric motor operates as a motor to supply assistance to the pedal-thrust and above which the motor operates as a generator when the moving bicycle is in a traction condition in which the speed of a wheel of the bicycle is substantially equal to the speed of a free-wheel mechanism associated with a wheel;
a2) calculating, as a function of the battery state of charge, a minimum value corresponding to the maximum energy recovery when the pedal-thrust group has no traction and when the bicycle is not braking;
b) calculating, for a plurality of first states associated with the bicycle during its movement, a plurality of trends of a first portion of a motor nominal command signal, as a function of the calculated values of the inversion speed and of the minimum value;
c1) identifying, as a function of the value of an angular speed of the wheel and of an angular speed of the free-wheel mechanism, the first current state associated with the bicycle during its movement; c2) selecting, out of the plurality of trends of the first portion of the motor nominal command signal, the current trend of the first portion associated with the identified first current state;
c3) calculating, for the selected trend in the first portion, the current value of the first portion of the motor nominal command signal, as a function of the current value of the bicycle speed;
d) calculating the current value of a motor corrected command signal as a function of the first portion and of the state of charge of the battery;
e) driving the electric motor using the calculated current value of the motor corrected command signal;
f) further repeating steps a1), a2), b), c1), c2), c3), d), e).

Preferably, in step a1) of the driving method, the inversion speed is calculated by scaling the inversion speed value with a first coefficient that depends on the state of charge of the battery, wherein said first coefficient is equal to one for values of the state of charge that are greater than a threshold value and decreases towards a minimum value as the state of charge decreases until it reaches the minimum value for small and null values of the state of charge; moreover, in step a2) the minimum value is calculated by scaling the minimum value with a second coefficient that depends on the state of charge of the battery, wherein said second coefficient is equal to a minimum value for values of the state of charge that are greater than the threshold value and increases towards the value of one upon the decrease in the state of charge until it reaches the value of one for small and null values of the state of charge.

Preferably, in step b) of the driving method said plurality of first states comprises at least two of the following states:
▪ Boost: it corresponds to a standing start or abrupt acceleration during the movement phase of the bicycle;
▪ No traction: it corresponds to a condition in which, when the bicycle is moving, the speed of the free-wheel mechanism is lower than the speed of the wheel;
▪ Traction: it corresponds to a condition in which the speed of the free-wheel mechanism is substantially equal to the speed of the bicycle wheel;
▪ Braking: it corresponds to a braking condition.

Preferably, step c1) of the driving method comprises identifying the Traction state and step c2) comprises selecting the trend of a first portion associated with the Traction state, said trend comprising:
▪ a first portion comprised between a null value of the speed of the bicycle and a defined value, wherein the first portion of the motor nominal command signal gradually increases from the null value to a maximum value;
▪ a second portion comprised between said defined value of the speed of the bicycle and the inversion speed value, wherein the second portion of the motor nominal command signal gradually decreases until it reaches the null value;
▪ a third portion comprised between the inversion speed value and a maximum speed value, wherein the third portion of the motor nominal command signal is negative until it reaches said minimum value;
▪ a fourth portion greater than the maximum speed value, wherein the fourth portion of the motor nominal command signal is substantially equal to said minimum value.

Preferably, in step d) of the driving method the current value of the motor corrected command signal is calculated:
- in case wherein the value of the first portion of the motor nominal command signal is positive, by scaling the first portion of the motor nominal command signal with a third coefficient that depends on the state of charge of the battery, wherein the third coefficient is equal to one for values of the state of charge that are greater than the threshold value, whereas it decreases towards the null value for values lower than the threshold value until it becomes null for small and null values of the state of charge;
- in case wherein the value of the first portion of the motor nominal command signal is negative, by scaling the first portion of the motor nominal command signal with a fourth coefficient that depends on the battery state of charge, wherein the fourth coefficient is equal to one for values of the state of charge that are lower than the threshold value, whereas it decreases towards the null value for values greater than the threshold value until it reaches the null value at the full charge value.

It is also an object of the present invention a computer program as defined in the enclosed claim 15.

It is also an object of the present invention a non-transitory computer-readable medium having a program recorded thereon, said medium comprising software code adapted to perform the steps of the method for driving the electric motor of an electrically pedal-assisted bicycle, when said program is run on at least one computer.

### Brief description of the drawings

For a better understanding of the invention and for appreciating the advantages thereof, several non-limiting example embodiments shall be described herein below, referring to the attached figures, of which:
- Figure 1 is a schematic illustration of a pedal-assisted bicycle;
- Figure 2 is a block diagram of an adaptive system for controlling a pedal-assisted bicycle according to a possible embodiment of the invention;
- Figure 3 is a block diagram of a nominal control module of the adaptive system for controlling a pedal-assisted bicycle according to a possible embodiment of the invention;
- Figures 4a-4f are diagrams showing possible trends of a motor nominal command signal of a pedal-assisted bicycle, said trends being supplied by the adaptive control system according to a possible embodiment of the invention;
- Figure 5 is a block diagram of an adaptive control module of the adaptive system for controlling a pedal-assisted bicycle according to a possible embodiment of the invention;
- Figures 6a-6b are diagrams showing possible trends of correction coefficients as determined by the adaptive control module of the adaptive system according to a possible embodiment of the invention;
- Figures 7a-7b are diagrams showing possible trends of further correction coefficients as determined by the adaptive control module of the adaptive system according to a possible embodiment of the invention;
- Figures 8a-8c show the flow diagram of a method for driving an electric motor of an electrically pedal-assisted bicycle.

### Detailed description of the invention

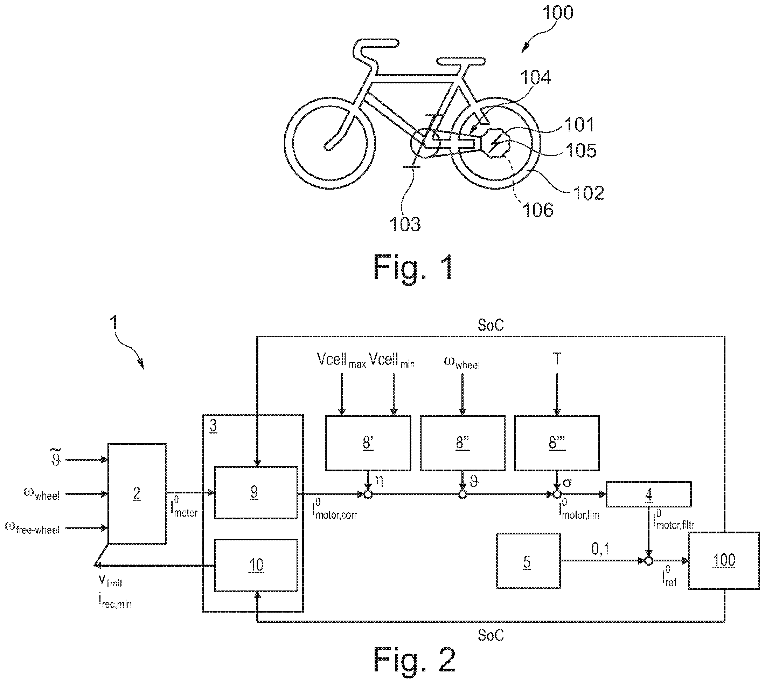

Figure 1 schematically shows a pedal-assisted bicycle 100.

The bicycle 100 comprises an electric motor 101 associated with one wheel 102 of the bicycle wheels, that is, the front or preferably the rear wheel.

The bicycle 100 further comprises a pedal-thrust group 103, by means of which the cyclist can supply power to the bicycle, and it is connected to one of the wheels, preferably the same wheel 102 with which the motor 101 is associated, by means of a transmission 104, for example a chain drive transmission.

The transmission 104 comprises a free-wheel mechanism 105 which makes it possible to decouple the wheel 102 and the pedal-thrust group 103 in the case in which, under conditions of advancement, the angular speed of the wheel 102 is greater than that of the pedal-thrust group 103 or of the pinion associated with the wheel 102 in the case in which it is provided between the pedal-thrust group 103 and the wheel.

For example, the free-wheel mechanism 105 enables backward movement of the pedal-thrust group 103 or possibly the stopping of pedalling without the latter interfering with the advancement movement of the wheel and thus of the bicycle itself during motion thereof.

The bicycle 100 further comprises a rechargeable battery 106 connected to the electric motor 101 in such a manner as to be able to exchange energy with the motor. The battery 106 can be made up of one or more cells connected in series.

In particular, the battery 106 can be recharged by the electric motor 101, when the motor operates as a generator (energy recovery condition), and it can supply energy to the electric motor 101 when the motor supplies assistance to the pedal-thrust (interlocked condition), that is when it operates a motor.

The battery 106 can be separated from the motor 101 or, in accordance with an alternative configuration of the "all-in-one" type, it can be housed inside a common closure body solidly connected to the wheel 102 together with the electric motor 101.

With reference to Figure 2, the bicycle 100 comprises a control system 1 of the adaptive type, which commands the electric motor 101 so as to assist the cyclist in assisted pedalling.

In particular, the control system 1 is configured to generate a motor reference command signal I°_{ref} (in particular, a current signal) upon which the driving or resisting torque of the motor depends.

The control system 1 comprises a nominal control module 2 (that is, a nominal controller) configured to output a motor nominal command signal I°ₘₒₜₒᵣ (in particular, a current signal).

The nominal control module 2 is implemented for example by means of sequential and combinational logic realized with VHDL or Verilog code and synthesized in a programmable logic device (for example an FPGA) .

Alternatively, the nominal control module 2 is implemented with software code portions (using for example the "C" language) executed in a processing unit (for example, a microprocessor).

The nominal control module 2 determines the motor nominal command signal I°ₘₒₜₒᵣ based on inputs coming from sensors associated with the control system 1 and/or the bicycle 100.

In particular, the system 1 comprises a sensor for detecting the angular speed ω_{wheel} of the wheel 102 and it is configured to generate a signal representative of the angular speed ω_{wheel} of the wheel 102. The system 1 further comprises a sensor for detecting the angular speed ω_{free-wheel} of the free-wheel mechanism 105 associated with the wheel 102 and it is configured to generate a signal representative of the angular speed ω_{free-wheel} of the free-wheel mechanism 105.

Additionally, the system 1 can comprise a sensor for measuring the slope ϑ̃ (that is, the inclination) of the route along which the bicycle 100 is moving, wherein the sensor is configured to generate a signal representative of the measured slope ϑ̃; alternatively, the system 1 comprises a module for estimating slope ϑ̃ (that is, an estimator of slope ϑ̃) and it is configured to generate a signal representative of the estimated slope ϑ̃.

In the case in which the slope ϑ̃ is not directly measured, but it is estimated, this estimate can be made by employing additional sensors (for example, inertial measurement units) and specific estimation algorithms (by way of example, see: 1) Ivo Boniolo, Stefano Corbetta, Sergio Savaresi. Attitude estimation of a motorcycle in a Kalman filtering framework. In Advances in Automotive Control, pages 779-784, 2010. 2) Sergio Savaresi, Ivo Boniolo. Estimate of the lean angle of motorcycles. VDM Verlag, 2010).

The motor nominal command signal I°ₘₒₜₒᵣ represents the motor control signal that is ideal for ensuring adequate comfort for the cyclist owing to the assistance provided by the motor 101.

As shall be seen below, this motor nominal command signal I°ₘₒₜₒᵣ is modified, with the procedures that shall be described, so as to obtain the motor reference command signal I°_{ref}, which takes into account the need to maintain the battery charge 106 without having to connect it to external sources of energy.

The control system 1 further comprises an adaptive control module 3 (that is, an adaptive controller 3) that is configured to generate a motor corrected command signal I°_{motor,corr} (in particular, a current signal) which is determined starting from the motor nominal command signal I°ₘₒₜₒᵣ which is corrected based on the state of charge SoC (that is, the charge level) of the battery 106. For this purpose, the system 1 comprises a sensor (for example, an electronic circuit) for detecting the state of charge SoC of the battery 106 and it is configured to generate a signal representative of the state of charge SoC of the battery 106.

The adaptive control module 3 is implemented for example by means of sequential and combinational logic realized with VHDL or Verilog code and synthesized in a programmable logic device (for example an FPGA) .

Alternatively, the adaptive control module 3 is implemented with software code portions (using for example the "C" language) executed in a processing unit (for example, a microprocessor).

According to a possible embodiment, the system 1 comprises one or more saturation modules 8', 8", 8''' for saturating the motor corrected command signal I°_{motor,corr} and which are configured to generate a motor limit command signal I°_{motor,lim} (in particular a current signal) which is obtained starting from the motor corrected command signal I°_{motor,corr} reduced by one or more coefficients η, ϑ, σ comprised between 0 and 1 based on detected operating parameters of the electric motor 101 and/or of the battery 106.

These modules 8', 8", 8" substantially have the function of preserving the components of the system.

According to a possible embodiment, a first saturation module 8' is configured to modify the motor corrected command signal I°_{motor,corr} by means of the coefficient η, which is comprised between 0 and 1, in such a manner that the voltage drop across the battery 106 is kept within the allowable maximum Vcellₘₐₓ and minimum Vcellₘᵢₙ limits. Therefore, for the purpose of preventing damage to the battery 106, the first saturation module 8' operates in such a manner that the voltage drop across the battery 106 does not fall below the minimum value Vcellₘᵢₙ during the motor interlock step and does not exceed the maximum value Vcellₘₐₓ during the recharging step.

According to a possible embodiment, a second saturation module 8" is configured to modify the motor corrected command signal I°_{motor,corr} when the signal is negative, by means of the coefficient ϑ, which is comprised between 0 and 1, in such a manner as to reduce recovery, that is, in such a manner as to increase (that is, make less negative) the motor corrected command signal I°_{motor,corr} at low bicycle speeds, given that under such conditions the motor is less efficient and tends to operate as an active brake and not as a regenerative brake.

For example, the bicycle speed v can be determined starting from the signal representative of the angular speed ω_{wheel} of the wheel 102 by means of the relation v = ω_{wheel} R, in which R is the radius of the wheel 102.

According to a possible embodiment, a third saturation module 8''' is configured to modify the motor corrected command signal I°_{motor,corr} when the signal is positive, by means of the coefficient σ, which is comprised between 0 and 1, in such a manner as to reduce the interlock upon the increase in the temperature of the motor. This prevents the temperature from exceeding the allowable limits, which would result in possible damage to the motor.

For this purpose, the system 1 advantageously comprises a sensor configured to detect the temperature T of the motor 101 and to generate a signal representative of the temperature T.

According to a possible embodiment, the system 1 comprises a filter 4 (preferably a low-pass filter) having the function of filtering the motor limit command signal I°_{motor,lim} and outputting a motor filtered command signal I°_{motor,filtr} (in particular a current signal).

The motor reference command signal I°_{ref} , according to this embodiment, corresponds to the motor filtered command signal I°_{motor,filtr}.

Note that in the case in which the saturation modules 8', 8", 8''' are not present, the motor limit command signal I°_{motor,lim} coincides with the motor corrected command signal I°_{motor,corr} which is filtered by the filter 4.

Note also that, likewise, in the case in which the filter 4 is not present either, the motor reference command signal I°_{ref} corresponds to the motor corrected command I°_{motor,corr}.

According to a possible embodiment, the system 1 comprises a failure detecting module 5 (that is, a failure sensor) configured to deactivate the motor 101 or to modulate the motor reference command signal I°_{ref} in the presence of detected failures in the system 1.

The nominal control module 2 and the adaptive control module 3 shall now be described in detail.

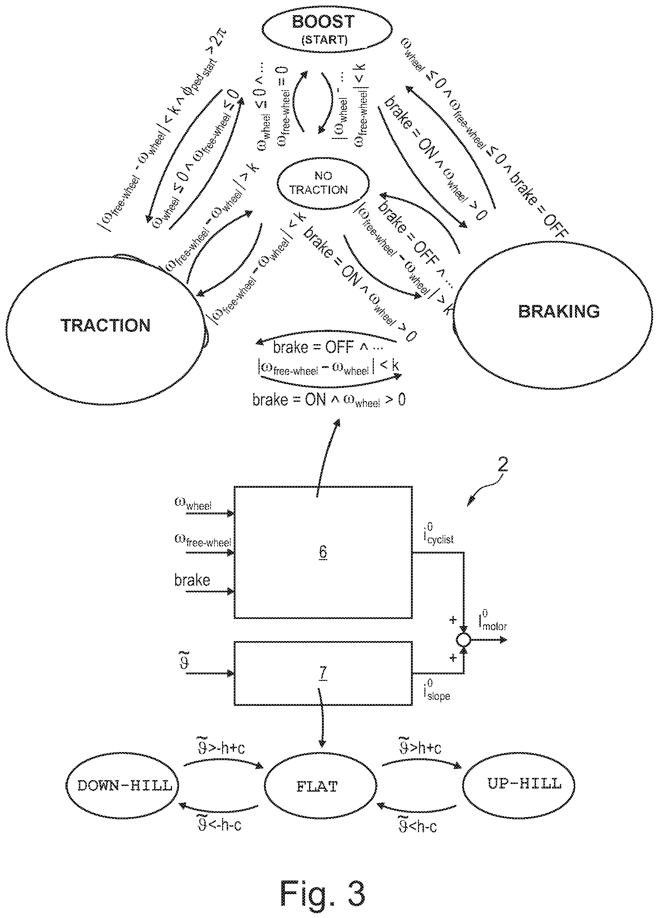

With reference to Figure 3, a block diagram of the nominal control module 2 is shown according to a possible embodiment of the invention.

The nominal control module 2 comprises a first finite state machine 6 and preferably a second finite state machine 7.

The first finite state machine 6 is configured to generate a first portion i°_{cyclist} of the motor nominal command signal I°ₘₒₜₒᵣ and the second finite state machine 7 is configured to generate a second portion i°ₛₗₒₚₑ of the motor nominal command signal I°ₘₒₜₒᵣ, such that the latter is given by the sum of the first portion i°_{cyclist} and the second portion i°ₛₗₒₚₑ of the motor nominal command signal I°ₘₒₜₒᵣ.

For example, the first portion i°_{cyclist} and the second portion i°ₛₗₒₚₑ are signals of current.

Referring to the first finite state machine 6, the machine 6 is configured to generate the first portion i°_{cyclist} of the motor nominal command signal I°ₘₒₜₒᵣ based on a state determined on the basis of the signal representative of the angular speed of the wheel ω_{wheel} and on the basis of the signal representative of the angular speed ω_{free-wheel} and possibly on the basis of an additional signal representative of the braking state ("braking").

With reference to the latter, note that, according to a possible embodiment, the bicycle can comprise a mechanical brake that can be activated with a handle, the activation of which is translated into said signal representative of the braking state.

Alternatively, or additionally, the bicycle may not have mechanical brakes and the braking action can be ensured by the electric motor 101 acting as a generator, which generates a resisting torque such as to brake the bicycle. The braking action in this case can be activated by pedalling backwards on the pedal-thrust group. This situation can be detected on the basis of the signal representative of the angular speed of the wheel ω_{wheel} and the signal representative of the angular speed ω_{free-wheel}, which will be positive and negative, respectively, in the case of pedalling backwards while the bicycle is in motion.

For example, the first finite state machine 6 can be configured to detect the following states:
- BOOST: corresponding to a standing start or abrupt acceleration during the movement phase of the bicycle. This state is preferably of finite duration, which can be established for example as a function of the number of pedal revolutions, or it can last until the bicycle reaches a predefined speed.
- NO TRACTION: corresponding to a condition in which, with the bicycle moving, the speed of the free-wheel mechanism is lower than the speed of the wheel. For example, this condition occurs when the bicycle is moving downhill without pedalling;
- TRACTION: corresponding to a condition in which the speed of the free-wheel mechanism, minus a tolerance, is equal to the speed of the bicycle wheel; this state corresponds for example to a condition of cruising at an approximately constant bicycle speed while pedalling;
- BRAKING: corresponding to a condition of braking the bicycle, according to said procedures.

Figure 3 reports possible criteria according to which the first finite state machine 6 passes from one state to another, assuming that starting from the condition in which the bicycle is stopped and in the absence of pedalling (ω_{wheel} = 0 and ω_{free-wheel} = 0), upon starting, the machine is brought into the "BOOST" state.

Note that in Figure 3, k indicates a predefined constant and φpedₛₜₐᵣₜ indicates the angle of rotation of the pedal-thrust group 103 upon starting, and which can be determined directly by means of a specific sensor or indirectly for example starting from the signal representative of the angular speed of the free-wheel mechanism ω_{free-wheel}.

The terms "ON" and "OFF" associated with braking indicate the conditions of active braking and no braking, respectively.

In particular:
- the machine passes from the "Boost" state into the "No Traction" state when the absolute value of the difference between the value of the angular speed of the wheel ω_{wheel} and the value of the angular speed ω_{free-wheel} of the free-wheel mechanism 105 is lower than the value of the constant k, and additionally the brake on the bicycle 100 is not activated, that is, the condition (|ω_{wheel}-ω_{free-wheel}| <k) AND brake=OFF) is respected;
- the machine passes from the "Boost" state into the "Traction" state when the absolute value of the difference between the value of the angular speed of the wheel ω_{wheel} and the value of the angular speed ω_{free-wheel} of the free-wheel mechanism 105 is lower than the value of the constant k, and additionally the value of the angle of rotation φpedₛₜₐᵣₜ is greater than 2n, that is, the condition (|ω_{wheel}-ω_{free-wheel}| <k AND φpedₛₜₐᵣₜ>2π) is respected. In other words, the condition concerning the pedal position is used in the standing start to determine when to pass from the "Boost" state to the "Traction" state, supplying assistance to the pedal-thrust if the condition concerning the angular speed is met; then after one rotation of the pedals, the machine passes into the "Traction" state;
- the machine passes from the "Boost" state into the "Braking" state when the brake on the bicycle 100 is activated and additionally the value of the angular speed of the wheel ω_{wheel} is greater than 0, that is, the condition (brake=ON AND (ω_{wheel}>0)) is respected;
- the machine remains in the "Boost" state as long as the absolute value of the difference between the value of the angular speed ω_{free-wheel} of the free-wheel mechanism 105 and the value of the angular speed of the wheel ω_{wheel} is greater than or equal to the value of the constant k, that is, the condition (|ω_{free-wheel}-ω_{wheel}|≥ k) is respected;
- from the "No Traction" state, the machine returns to the "Boost" state when the value of the angular speed of the wheel ω_{wheel} is less than or equal to 0 and in addition, the value of the angular speed ω_{free-wheel} of the free-wheel mechanism 105 is equal to 0, that is, the condition (ω_{wheel}≤0 AND ω_{free-wheel}=0) is respected;
- the machine passes from the "No Traction" state into the "Traction" state when the absolute value of the difference between the value of the angular speed ω_{free-wheel} of the free-wheel mechanism 105 and the value of the angular speed of the wheel ω_{wheel} is lower than the value of the constant k, that is, the condition (|ω_{free-wheel}-ω_{wheel}| <k) is respected;
- the machine passes from the "No Traction" state into the "Braking" state when the brake on the bicycle 100 is activated and additionally the value of the angular speed of the wheel ω_{wheel} is greater than 0, that is, the condition (brake=ON AND (ω_{wheel}>0)) is respected;
- the machine remains in the "No Traction" state as long as the absolute value of the difference between the value of the angular speed of the wheel ω_{wheel} and the value of the angular speed ω_{free-wheel} of the free-wheel mechanism 105 is greater than or equal to the value of the constant k, and additionally the brake on the bicycle 100 is not activated, that is, the condition (|ω_{wheel}-ω_{free-wheel}|≥k) AND brake=OFF) is respected;
- the machine passes from the "Traction" state into the "Boost" state when the value of the angular speed of the wheel ω_{wheel} is less than or equal to 0 and in addition, the value of the angular speed ω_{free-wheel} of the free-wheel mechanism 105 is less than or equal to 0, that is, the condition (ω_{wheel}≤0 AND ω_{free-wheel}≤0) is respected;
- the machine passes from the "Traction" state into the "No Traction" state when the absolute value of the difference between the value of the angular speed ω_{free-wheel} of the free-wheel mechanism 105 and the value of the angular speed of the wheel ω_{wheel} is greater than the value of the constant k, and additionally the brake on the bicycle 100 is not activated, that is, the condition (|ω_{free-wheel}-ω_{wheel}|>k) AND brake=OFF) is respected;
- the machine passes from the "Traction" state into the "Braking" state when the brake on the bicycle 100 is activated and additionally the value of the angular speed of the wheel ω_{wheel} is greater than 0, that is, the condition (brake=ON AND (ω_{wheel}>0)) is respected;
- the machine remains in the "Traction" state as long as the value of the angular speed of the wheel ω_{wheel} is greater than 0 or the value of the angular speed ω_{free-wheel} of the free-wheel mechanism 105 is greater than 0, and additionally the absolute value of the difference between the value of the angular speed ω_{free-wheel} of the free-wheel mechanism 105 and the value of the angular speed of the wheel ω_{wheel} is lower than or equal to the value of the constant k and in addition the brake on the bicycle 100 has not been activated, that is, the condition (ω_{wheel}>0 OR ω_{free-wheel}>0) AND (|ω_{free-wheel}-ω_{wheel}|≥k) AND brake=OFF is respected;
- the machine passes from the "Braking" state into the "Boost" state when the value of the angular speed of the wheel ω_{wheel} is less than or equal to 0 and additionally the value of the angular speed ω_{free-wheel} of the free-wheel mechanism 105 is less than or equal to 0, and in addition, the brake on the bicycle 100 has not been activated, that is, the condition (ω_{wheel}≤0 AND ω_{free-wheel}≤0 AND BRAKE=OFF) is respected;
- the machine passes from the "Braking" state into the "Traction" state when the brake on the bicycle 100 is not activated and additionally the absolute value of the difference between the value of the angular speed ω_{free-wheel} of the free-wheel mechanism 105 and the value of the angular speed of the wheel ω_{wheel} is lower than the value of the constant k, that is, the condition (brake=OFF AND (|ω_{free-wheel}-ω_{wheel}|<k)) is respected;
- the machine passes from the "Braking" state into the "No Traction" state when the brake on the bicycle 100 is not activated and additionally the absolute value of the difference between the value of the angular speed ω_{free-wheel} of the free-wheel mechanism 105 and the value of the angular speed of the wheel ω_{wheel} is greater than the value of the constant k, that is, the condition (brake=OFF AND (|ω_{free-wheel}-ω_{wheel}|>k)) is respected;

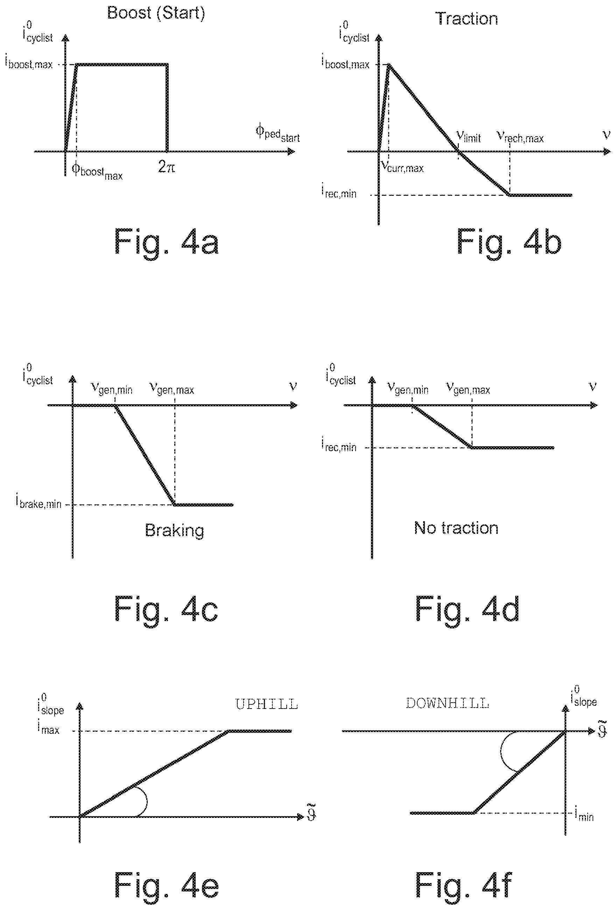

Figures 4a-4d shows possible trends of the first portion i°_{cyclist} of the motor nominal command signal I°ₘₒₜₒᵣ in the different states of the first finite state machine 6.

In the "BOOST" state (Figure 4a), starting from zero, the signal i°_{cyclist} gradually reaches, for example linearly, a maximum value i_{boost,max} when the angle of rotation of the pedal-thrust group Φ_{ped start} reaches a predefined value φ_{boost max}, which is preferably less than 2n, that is, before the pedal-thrust group 103 has performed a complete revolution.

In the "TRACTION" state (Figure 4b), when the speed of the bicycle v (which can be determined by means of the relation v = ω_{wheel}*R, in which R is the radius of the wheel 102) is comprised between zero and a predetermined value v_{curr,max}, the signal i°_{cyclist}, starting from zero, gradually reaches, for example linearly, a maximum value i_{boost,max}.

Between the speed value v_{curr,max} and the inversion speed value vₗᵢₘᵢₜ, the signal i°_{cyclist} decreases gradually, for example linearly, remaining positive until it reaches the null value. Upon the increase in the speed of the bicycle v beyond the inversion speed value vₗᵢₘᵢₜ, the signal i°_{cyclist} becomes negative until it reaches a minimum value i_{rec,min}, corresponding to a maximum energy recovery condition, at a maximum speed v_{rech,max}.

The above illustrates the fact that assistance by the motor is greater at low speeds, decreases with increasing speeds until it becomes null at the inversion speed vₗᵢₘᵢₜ. When the latter speed is exceeded, the motor starts to operate as a generator, that is, it no longer provides added torque, but it forces the cyclist to provide added power, which serves to recharge the battery 106.

Note that the maximum effort is required of the cyclist at the speed v_{rech,max}, which is preferably selected so as to correspond to a pedalling cadence of about 70 revolutions/min, at which it has been verified that maximum efficiency is attained by the cyclist.

In the "BRAKING" (Figure 4c) and "NO TRACTION" (Figure 4d) states, starting from zero, the signal i°_{cyclist} decreases gradually, for example linearly, starting from a minimum speed for activation of the recovery v_{gen,min} from zero, until it reaches the minimum value, i_{brake,min} and i_{rec,min}, respectively, at a maximum speed v_{gen,max}.

For speeds higher than this maximum speed v_{gen,max}, the signal i°_{cyclist} remains constant and equal to i_{brake,min} and i_{rec,min}, respectively.

Note that the value i_{rec,min} corresponds to the maximum energy recovery when the pedal-thrust group has no traction and when the bicycle is not braking.

The value of i_{rec,min} is selected so as not to excessively influence the perception on the part of the cyclist when the cyclist is pedalling in this condition.

Referring now to be second finite state machine 7, it can be configured to detect the following states:
- "DOWN-HILL": This state corresponds to a condition in which the bicycle is moving along a downhill route;
- "FLAT": This state corresponds to a condition in which the bicycle is moving along a substantially flat route;
- "UP-HILL": This state corresponds to a condition in which the bicycle is moving along an uphill route.

Figure 3 shows possible criteria according to which the second finite state machine 7 passes from one state to another.

Note that in Figure 3, h and c indicate predefined constants and ϑ̃ indicates the measured or estimated slope.

The constants h and c are selected so as to obtain operation with hysteresis:
- when the slope ϑ̃ fluctuates around the null value (that is, in the "FLAT" state), the second finite state machine waits until the slope ϑ̃ exceeds the absolute value of the sum of h and c in order to change states, that is, the condition (ϑ̃≤|h+c|) is respected;
- in the "DOWNHILL" and "UPHILL" states, the machine waits until the slope ϑ̃ is lower than the absolute value of the difference between h and c, before returning to the "FLAT" state, that is, it remains in the "DOWNHILL" and "UPHILL" states as long as the condition (ϑ̃ ≥ |h-c|) is respected.

In this manner, the change in states is carried out only when it is certain that the slope ϑ̃ is consistent with the situation in which bicycle control system is actually found.

In particular:
- the machine passes from the "DOWNHILL" state into the "FLAT" state when the value of the slope ϑ̃ is greater than the value (-h+c), that is, the condition (ϑ̃ >-h+c) is respected;
- the machine remains in the "DOWNHILL" state as long as the value of the slope ϑ̃ is greater than or equal to the absolute value of the difference between h and c, that is, the condition (ϑ̃ ≥|h-c|) is respected;
- from the "FLAT" state, the machine returns to the "DOWNHILL" state when the value of the slope ϑ̃ is lower than the value (-h-c), that is, the condition (ϑ̃ <-h-c) is respected;
- the machine passes from the "FLAT" state into the "UPHILL" state when the value of the slope ϑ̃ is greater than the value(+h+c), that is, when the condition (ϑ̃ >+h+c) is respected;
- the machine remains in the "FLAT" state as long as the value of the slope ϑ̃ is lower than or equal to the absolute value of the sum of h and c, that is, the condition ϑ̃≤|h+c| is respected;
- from the "UPHILL" state, the machine returns to the "FLAT" state when the value of the slope ϑ̃ is lower than the value (+h+c), that is, the condition (ϑ̃ <+h+c) is respected;
- the machine remains in the "UPHILL" state as long as the value of the slope ϑ̃ is greater than or equal to the absolute value of the difference between h and c, that is, the condition (ϑ̃ ≥|h-c|) is respected;

Figures 4e-4f report possible trends of the second portion i°ₛₗₒₚₑ of the motor nominal command signal I°ₘₒₜₒᵣ in the different states of the second finite state machine 7.

In the "FLAT" state, the contribution of the second finite state machine 7 to the motor nominal command signal I°ₘₒₜₒᵣ is null.

In the "UPHILL" state (Figure 4e), the signal i°ₛₗₒₚₑ increases gradually, for example linearly, starting from zero, upon the increase in the estimated or measured slope ϑ̃, until it reaches a maximum value iₘₐₓ. Therefore, assistance by the motor increases with the increase in slope.

In the "DOWNHILL" state /Figure 4f), the signal i°ₛₗₒₚₑ decreases gradually, for example linearly, starting from zero, upon the decrease in the estimated or measured slope ϑ̃ (that is, with the increase in the slope of the descent), until it reaches a minimum value, or maximum in terms of absolute value iₘᵢₙ. Therefore, recovery by the motor increases with the increase in the slope of the descent, up to a maximum recovery value.

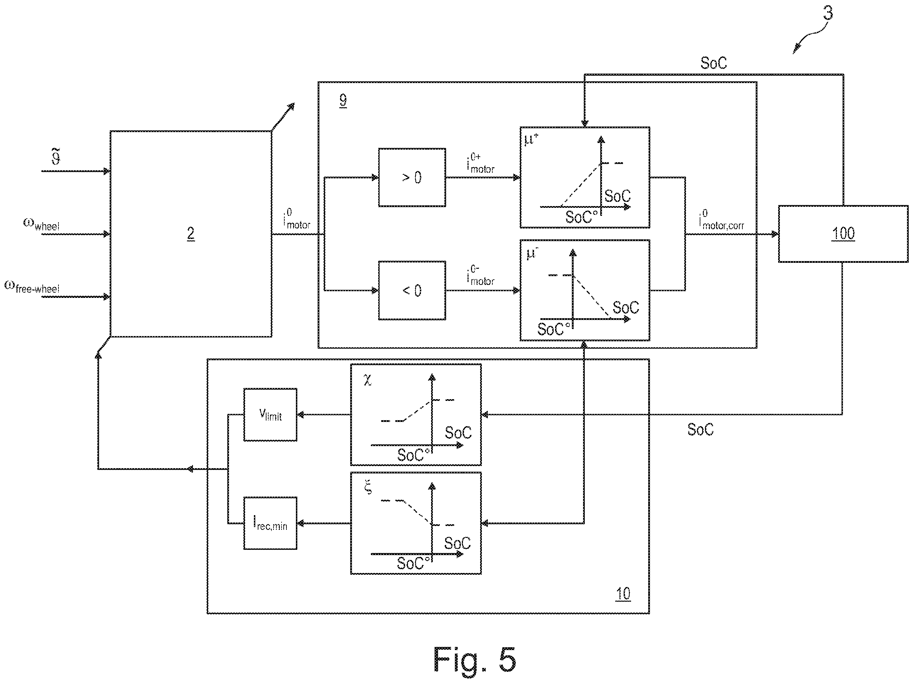

Referring now to Figure 5, a block diagram of the adaptive control module 3 is shown according to a possible embodiment of the invention.

The adaptive control module 3 comprises a correction module for correcting the nominal command signal 9 (that is, a command corrector) and a correction module 10 for correcting the parameters (that is, a parameter corrector) of the nominal control module 2, particularly of the first finite state machine 6.

With reference to the correction module 9 for correcting the nominal command signal, this module receives as an input the motor nominal command signal I°ₘₒₜₒᵣ and a signal representative of the state of charge SoC of the battery 106 and scales by a coefficient µ⁺ or by a coefficient µ⁻ the motor nominal command signal I°ₘₒₜₒᵣ depending on whether the latter is positive or negative, respectively, as a function of the state of charge SoC.

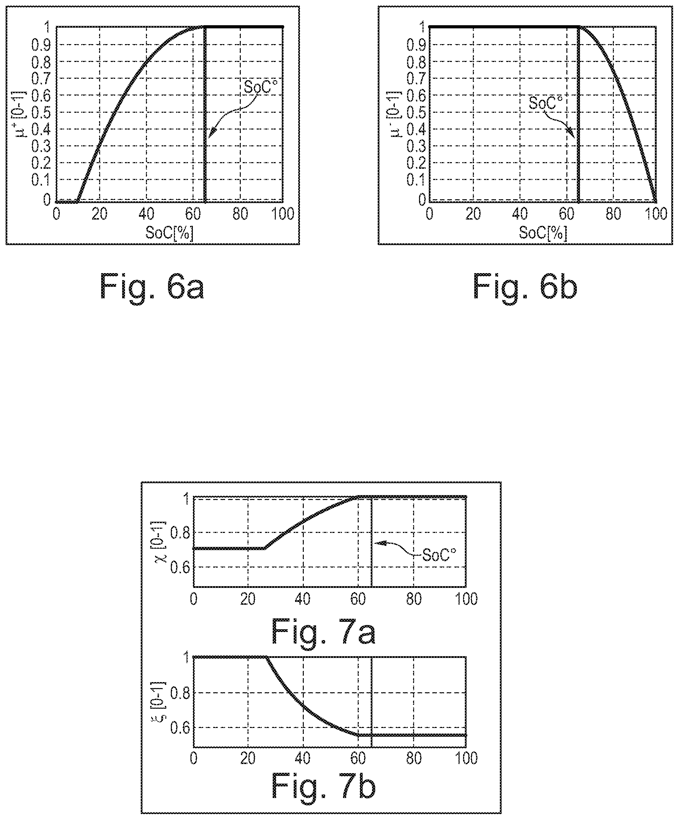

The coefficients µ⁺ and µ⁻ can vary as a function of the state of charge SoC based on predefined laws and possible trends thereof are shown in Figures 6a and 6b.

In particular, the coefficient µ⁺ (Figure 6a) is equal to 1 for charge values exceeding a threshold value SoC° and it decreases upon the decrease in the charge until it becomes null for small and null values of the charge.

The coefficient µ⁻ (Figure 6b) is equal to 1 for charge values below a threshold value SoC° and it decreases upon the increase in the charge until it reaches a null value at the full charge value.

In this manner, the interlock is limited in the case of a low level of the battery 106, whereas recharging is limited in the case of a high charge level of the battery 106.

Returning back to Figure 5, the correction module 10 for correcting the parameters of the nominal control module 2 receives as an input the signal representative of the state of charge SoC of the battery 106 and it scales the inversion speed vₗᵢₘᵢₜ and the minimum value i_{rec,min} of the signal i°_{cyclist}, by a coefficient χ and by a coefficient ξ respectively.

The coefficients χ and ξ can vary as a function of the state of charge SoC based on predefined laws and possible trends thereof are shown in Figures 7a and 7b.

In particular, the coefficient χ (Figure 7a) is equal to 1 for charge values exceeding the threshold value SoC° and it decreases upon the decrease in the charge until it reaches a minimum constant value for small and null values of the charge.

The coefficient ξ (Figure 7b) is equal to 1 for charge values below the threshold value SoC° and it decreases upon the increase in the charge until it reaches a minimum constant value for almost full or full charge values.

In this manner, for low charge values, the inversion speed vₗᵢₘᵢₜ is reduced, and therefore energy recovery in the "TRACTION" state takes place starting from low speeds of the bicycle and additionally assistance to the pedal-thrust also takes place only for low speeds, on the whole thereby facilitating the recharging process.

Moreover, under these conditions, there is maximum energy recovery, given that the value i_{rec,min} of the signal i°_{cyclist} is a minimum value, or maximum in terms of absolute value.

Conversely, for high charge values, the inversion speed vₗᵢₘᵢₜ remains at the nominal value, and therefore energy recovery in the "TRACTION" state takes place starting from the higher bicycle speeds and additionally, assistance takes place over a wider range of speeds, thus prioritizing the interlock over the battery charge.

Moreover, under these conditions, there is minimum recovery according to that which is provided for by the nominal logic, as the value i_{rec,min} of the signal i°_{cyclist} is a maximum value (that is, it is less negative).

Note that in this description and in the appended claims, the adaptive control system 1, as well as the elements indicated by the term "module", can be implemented by means of hardware devices (e.g. control units), by means of software or by means of a combination of hardware and software.

For the purpose of meeting contingent and specific needs, a person skilled in the art can introduce numerous additions, modifications or replacements of elements with other functionally equivalent elements in the disclosed embodiments of the system for adaptive control of a pedal-assisted bicycle, without, however, deviating from the scope of the appended claims.

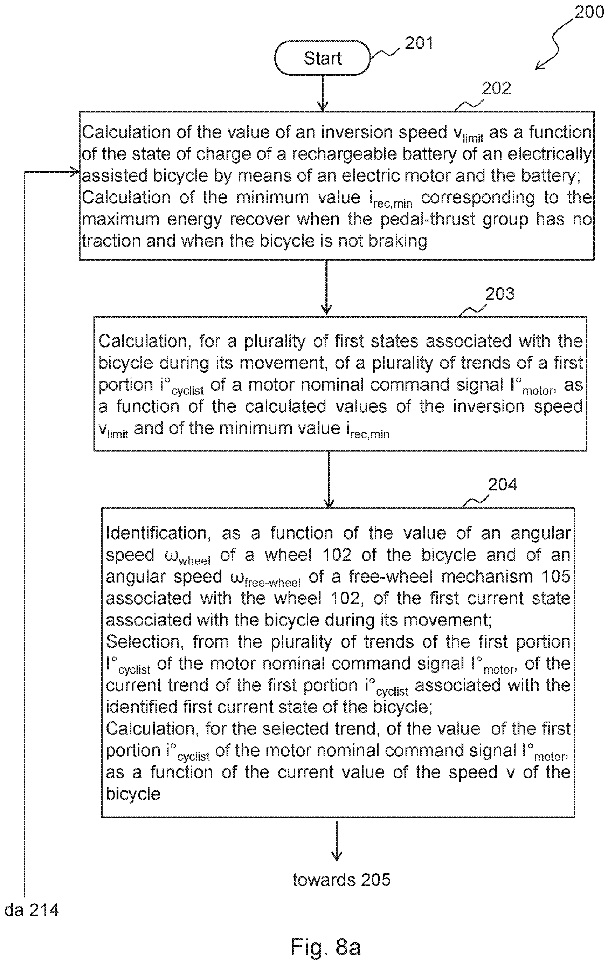

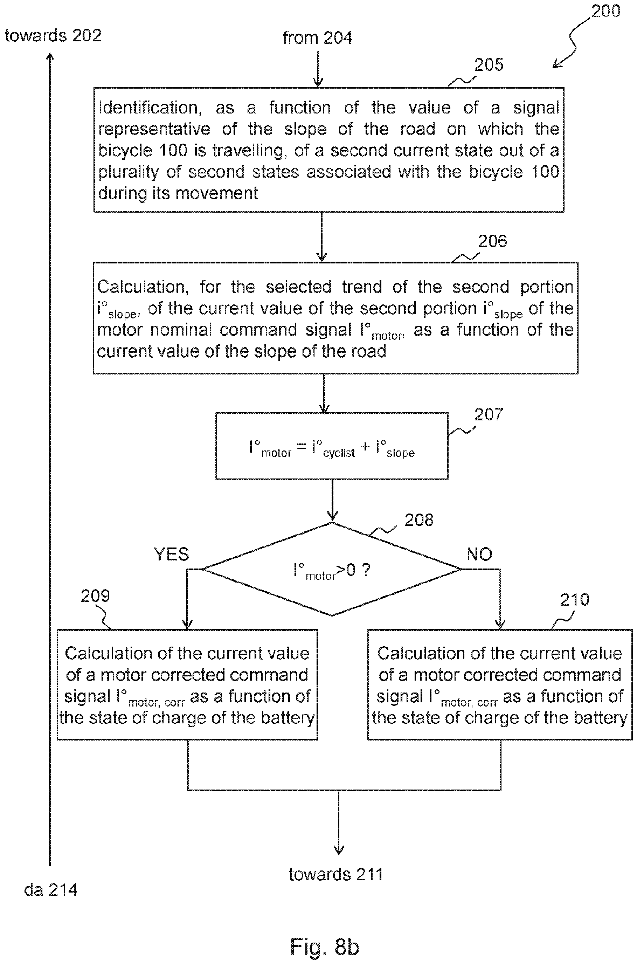

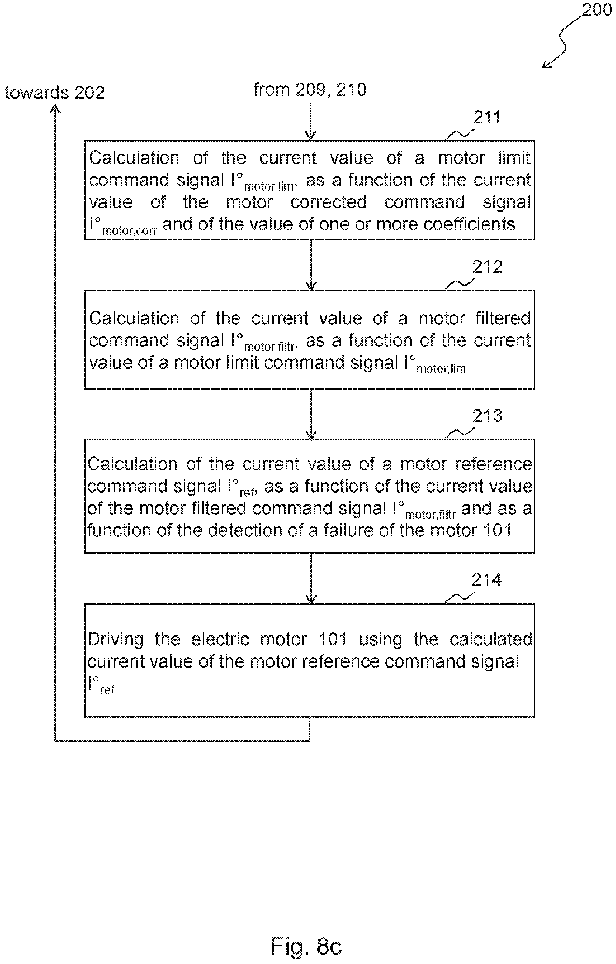

Figures 8a-c show a flow diagram of a method 200 for driving the electric motor 101 of the electrically pedal-assisted bicycle.

The electric motor 101 is such to have a first and a second operating mode.

In the first operating mode (previously indicated as the "interlocked condition"), the electric motor is such to operate as a motor supplied by the battery 106, that is, it is such to convert the electric power supplied by the battery 106 into mechanical power used to set the electric motor into rotation and thus contribute to the movement of the bicycle, supplying the cyclist with assistance to the pedal-thrust.

In the second operating mode (previously indicated as the "energy recovery condition"), the electric motor is such to operate as an electric generator in order to charge the battery 106.

The driving method 200 begins with step 201 and comprises steps 202-214, which are repeated cyclically, for example with a period of 10 milliseconds.

A first operating cycle, in which steps 202-214 are performed, is illustrated herein below.

Step 201 is followed by step 202, in which the inversion speed value vₗᵢₘᵢₜ is calculated as a function of the state of charge SoC of the battery 106.

In particular, in step 202, the nominal value of the inversion speed vₗᵢₘᵢₜ is scaled (that is, multiplied) by a coefficient χ having values comprised between 0 and 1 as a function of the state of charge SoC of the battery 106, thus obtaining a new value of vₗᵢₘᵢₜ.

For example, the nominal value of the inversion speed vₗᵢₘᵢₜ is equal to a value defined in a configuration stage or it is initialized with a default value. For example, the nominal value of the inversion speed vₗᵢₘᵢₜ is selected so that under controlled conditions, the nominal control logic alone makes it possible to maintain the state of charge of the battery 106, considering a closed path.

More specifically, the coefficient χ has a trend that is a function of the state of charge SoC of the battery 106 as shown in Figure 7a, in which the coefficient χ is equal to 1 for state of charge SoC values greater than the threshold value SoC°, whereas it decreases towards a minimum value (for example equal to 0.7) upon the decrease in the state of charge SoC until it reaches the minimum value for small and null values of the state of charge SoC. In this manner, the inversion speed value vₗᵢₘᵢₜ is reduced for small values of the state of charge SoC of the battery 106, whereas the inversion speed value vₗᵢₘᵢₜ remains substantially equal to the nominal value for high values of the state of charge SoC of the battery 106.

Moreover, in step 202, the minimum value i_{rec,min} is calculated as a function of the state of charge SoC of the battery 106, said minimum value i_{rec,min} corresponding to the maximum energy recovery when the pedal-thrust group has no traction and when the bicycle is not braking.

In particular, in step 202, the nominal value i_{rec,min} is scaled (that is, multiplied) by a coefficient ξ having values comprised between 0 and 1 as a function of the state of charge SoC of the battery 106, thus obtaining a new minimum value i_{rec,min}.

For example, the nominal value i_{rec,min} is equal to a value defined in a configuration stage or it is initialized with a predefined value. For example, the nominal value i_{rec,min} is selected so that under controlled conditions, the nominal control logic alone makes it possible to maintain the state of charge of the battery 106, considering a closed path.

More specifically, the coefficient ξ has a trend that is a function of the state of charge SoC of the battery 106 as shown in Figure 7b, in which the coefficient ξ is equal to a minimum value (for example equal to 0.4) for state of charge SoC values greater than the threshold value SoC°, whereas it increases towards the value of 1 upon the decrease in the state of charge SoC until it reaches the value of 1 for small and null values of the state of charge SoC. In this manner, the value i_{rec,min} increases for small values of the state of charge Soc of the battery 106, whereas the value i_{rec,min} decreases for high values of the state of charge SoC of the battery 106.

Step 202 is followed by step 203, in which for a plurality of first states associated with the bicycle 100 during its movement, a plurality of trends of a first portion i°_{cyclist} of the motor nominal command signal I°ₘₒₜₒᵣ are calculated, as a function of the calculated values (that is, scaled) of the inversion speed vₗᵢₘᵢₜ and of the minimum value i_{rec,min}.

Said plurality of first states associated with the bicycle 100 are defined in advance (for example, they are predefined or they are configured by the cyclist) and for example they are the "Boost", "Traction", "Braking" and "No Traction" states illustrated previously in the description of the first state machine in Figure 3.

More specifically, in step 203 the trends of the first portion i°_{cyclist} (of the motor nominal command signal I°ₘₒₜₒᵣ) are calculated for the "Boost", "Traction", "Braking" and "No Traction" states shown in Figures 4a, 4b, 4c and 4d, respectively.

Step 203 is followed by step 204, in which the first current state associated with the bicycle 100 during its movement is identified, as a function of the value of a signal representative of the angular speed ω_{wheel} of the wheel 102 and of the value of a signal representative of the angular speed ω_{free-wheel} of the free-wheel mechanism 105 associated with the wheel 102.

Moreover, in step 204, the current trend of the first portion i°_{cyclist} associated with the identified first current state of the bicycle 100 is selected from the plurality of trends of the first portion I°_{cyciist} of the motor nominal command signal I°ₘₒₜₒᵣ.

In conclusion, in step 204, for the selected trend of the first portion i°_{cyclist}, the current value of the first portion i°_{cyclist} of the motor nominal command signal I°ₘₒₜₒᵣ is calculated as a function of the current value of the speed v of the bicycle. The speed v of the bicycle 100 is calculated for example as a function of the current value of the angular speed ω_{wheel} of the wheel 102 by means of the relation v = ω_{wheel*}R, in which R is the radius of the wheel 102.

For example:
- in step 204, it is identified that the bicycle 100 is in the first "Traction" state, then the trend of the first portion i°_{cyclist} shown in Figure 4b is selected and the value i°_{cyclist} is calculated for the latter as a function of the current value of the speed v of the bicycle 100; or
- in step 204, it is identified that the bicycle 100 is in the first "Boost" state, then the trend of the first portion i°_{cyclist} shown in Figure 4a is selected and the value i°_{cyclist} is calculated for the latter as a function of the current value of the speed v of the bicycle 100; or
- in step 204, it is identified that the bicycle 100 is in the first "No Traction" state, then the trend of the first portion i°_{cyclist} shown in Figure 4d is selected and the value i°_{cyclist} is calculated for the latter as a function of the current value of the speed v of the bicycle 100; or
- in step 204 it is identified that the bicycle 100 is in the first "Braking" state, then the trend of the first portion i°_{cyclist} shown in Figure 4c is selected and the value i°_{cyclist} is calculated for the latter as a function of the current value of the speed v of the bicycle 100.

Step 204 is followed by step 205, in which a second current state, out of a plurality of second states associated with the bicycle 100 during its movement, is identified, as a function of the value of a signal representative of the slope ϑ̃ of the road on which the bicycle 100 is travelling.

Moreover, in step 205, the current trend of the second portion i°ₛₗₒₚₑ associated with the identified second state of the bicycle 100 is selected from a plurality of trends of a second portion i°ₛₗₒₚₑ of the motor nominal command signal I°ₘₒₜₒᵣ.

Said plurality of second states are for example the "Downhill", "Flat" and "Uphill" states illustrated previously in the description of the second state machine in Figure 3.

Step 205 is followed by step 206, in which, for the selected trend of the second portion i°ₛₗₒₚₑ, the current value of the second portion i°ₛₗₒₚₑ of the motor nominal command signal I°ₘₒₜₒᵣ is calculated as a function of the current value of the slope ϑ̃ of the road.

For example:
- in step 206 it is identified that the bicycle 100 is in the second "Uphill" state, then the trend of the second portion i°ₛₗₒₚₑ shown in Figure 4e is selected and the value i°ₛₗₒₚₑ is calculated for the latter as a function of the current value of the slope ϑ̃ of the road; or
- in step 206 it is identified that the bicycle 100 is in the second "Downhill" state, then the trend of the second portion i°ₛₗₒₚₑ shown in Figure 4f is selected and the value i°ₛₗₒₚₑ is calculated for the latter as a function of the current value of the slope ϑ̃ of the road.

Step 206 is followed by step 207, in which the motor nominal command signal I°ₘₒₜₒᵣ is calculated as the sum of the first portion i°_{cyclist} and the second portion i°ₛₗₒₚₑ.

Note that steps 205 and 206 are optional, that is, the cycle can proceed directly from step 204 to step 207. In this case, the motor nominal command signal I°ₘₒₜₒᵣ only comprises the contribution of the first portion i°_{cyclist}.

Step 207 is followed by step 208, in which it is verified whether the calculated value of the motor nominal command signal I°ₘₒₜₒᵣ is greater than 0:
- in the positive case (that is I°ₘₒₜₒᵣ>0), step 208 is followed by step 209;
- in the negative case (that is I°ₘₒₜₒᵣ<0), step 208 is followed by step 210.

In step 209, the current value of the motor corrected command signal I°_{motor, corr} is calculated as a function of the state of charge SoC of the battery 106.

In particular, in step 209 the motor corrected command signal I°_{motor, corr} is scaled (that is, multiplied) by a coefficient µ⁺ having values between 0 and 1 as a function of the state of charge SoC of the battery 106, thus obtaining a new value of the motor corrected command Signal I°_{motor, corr}.

More specifically, the coefficient µ⁺ has a trend that is a function of the state of charge SoC of the battery 106, as shown in Figure 6a, in which the coefficient µ⁺ is equal to 1 for state of charge SoC values greater than the threshold value SoC°, whereas it decreases towards the value of 0 for values lower than the threshold value SoC° until it becomes null for small and null values of the state of charge SoC. In this manner, the assistance provided to the cyclist is reduced in the case of a low state of charge SoC of the battery 106, until it is eliminated so as to prevent the battery 106 from discharging completely.

In step 210, the current value of the motor corrected command signal I°_{motor, corr} is calculated as a function of the state of charge SoC of the battery 106.

In particular, in step 210 the motor corrected command signal I°_{motor, corr} is scaled (that is, multiplied) by a coefficient µ⁻ having values comprised between 0 and 1 as a function of the state of charge SoC of the battery 106, thus obtaining a new value of the motor corrected command signal I°_{motor, corr}.

More specifically, the coefficient µ⁻ has a trend that is a function of the state of charge SoC of the battery 106, as shown in Figure 6b, in which the coefficient µ⁺ is equal to 1 for state of charge SoC values lower than the threshold value SoC°, whereas it decreases towards the value of 0 for values greater than the threshold value SoC° until it reaches the null value at the full charge value. In this manner, recharging is reduced in the case of a high state of charge of the battery 106, thereby avoiding useless fatigue of the cyclist.

From steps 209 and 210, the cycle proceeds to step 211 in which the value of a motor limit command signal I°_{motor,lim} I° is calculated as a function of the value of the motor corrected command signal I°_{motor,corr} and by taking into consideration one or more of the following values: the maximum value Vcellₘₐₓ of the voltage across the battery 106, the minimum value Vcellₘᵢₙ of the voltage across the battery 106, the current value of the speed v of the bicycle 100, and the current value of the temperature of the electric motor 101.

In particular, calculation of the motor limit command signal I°_{motor,lim} is carried out by scaling (that is, by multiplying) the motor limit command signal I°_{motor,lim} by one or more of the coefficients η, ϑ, σ illustrated previously in the description of the saturation modules 8', 8", 8''' shown in Figure 2.

Step 211 is followed by step 212 in which the current value of a motor filtered command signal I°_{motor,filtr} is calculated as a function of the current value of the motor limit command signal I°_{motor,lim}.

Note that the presence of step 211 is optional, that is, it is possible to pass directly from steps 209, 210 to step 212.In this case, the current value of the motor filtered command signal I°_{motor,filtr} coincides with the calculated current value of the motor corrected command signal I°_{motor,corr}.

Step 212 is followed by step 213, in which the current value of a motor reference command signal I°_{ref} is calculated as a function of the current value of the motor filtered command signal I°_{motor,filtr} and as a function of the detection of a failure of the motor 101.

Step 213 is followed by step 214, in which the electric motor 101 is driven using the calculated current value of the motor reference command signal I°_{ref} .

The cycle returns to step 202 from step 214 and then a second cycle is performed in which steps 202-214 are repeated as illustrated above.

In particular, during the second cycle, the value of the inversion speed vₗᵢₘᵢₜ is recalculated in step 202, as a function of the current value of the state of charge SoC of the battery 106, for example by scaling the calculated value of the inversion speed vₗᵢₘᵢₜ in the first cycle with the coefficient χ and obtaining a new value of the inversion speed vₗᵢₘᵢₜ. Likewise, during the second cycle the minimum value i_{rec,min} is recalculated in step 202, as a function of the current state of charge SoC of the battery 106, for example by scaling the minimum value i_{rec,min} calculated in the first cycle with the coefficient ξ and obtaining a new minimum value i_{rec,min}.

As a result, during the second cycle the plurality of trends of the first portion i°_{cyclist} of the motor nominal command signal I°ₘₒₜₒᵣ are recalculated in step 203, as a function of the recalculated values of the inversion speed vₗᵢₘᵢₜ and the minimum value i_{rec,min}.

Moreover, during the second cycle the current value of the motor corrected command signal I°_{motor, corr} is recalculated in steps 209 and 210, as a function of the current value of the state of charge SoC of the battery 106, for example by scaling the value calculated in the first cycle with the coefficient µ⁺ or with the coefficient µ⁻.

Note that the presence of step 213 is optional, that is, it is possible to pass directly from step 212 to step 214. In this case, the current value of the motor reference command signal I°_{ref} coincides with the calculated current value of the motor filtered command signal I°_{motor,filtr}.

Likewise, the presence of steps 211, 212 and 213 is optional. In this case, the current value of the motor reference command signal I°_{ref} coincides with the current value of the motor corrected command Signal I°_{motor,corr}.

It is also an object of the present invention an electronic control system 1 to drive an electric motor 101 of a electrically pedal-assisted bicycle 100 by means of a rechargeable battery 106, wherein the electric motor is configured to operate as a motor supplied by the battery 106 or as an electric generator for recharging the battery 106.

The electronic control system 1 comprises a processing unit that implements the nominal control module 2 and the adaptive control module 3, both of which are described hereinabove, by means of a suitable software code and/or hardware components.

The processing unit is for example a microprocessor, a microcontroller, a programmable logic device or a dedicated circuit.

The electronic control system 1 further comprises a measurement circuit to measure the state of charge SoC of the battery 106 and it is electrically connected to the battery 106 and to the processing unit.

The electronic control system 1 further comprises a current management circuit, which is electrically connected to the battery 106 and to the electric motor 101 and it is electrically connected to the processing unit. The current management circuit has the function of controlling the direction of the current between the battery 106 and the electric motor 101, so that the latter can operate as a motor or as an electric generator.

The processing unit, the measurement circuit for measuring the state of charge SoC and the current management circuit are positioned inside the hub of the rear wheel 102 of the bicycle 100.

The processing unit is configured to:
- calculate the value of a inversion speed vₗᵢₘᵢₜ as a function of the state of charge SoC of the battery 106, said inversion speed indicating the speed of the bicycle beneath which the electric motor operates as a motor to supply assistance to the pedal-thrust and above which the motor operates as a generator when the moving bicycle is in a condition of traction in which the speed of a wheel 102 of the bicycle is substantially equal to the speed of the free-wheel mechanism 105;
- calculate a minimum value i_{rec,min} as a function of the state of charge SoC of the battery 106, said minimum value i_{rec,min} corresponding to the maximum energy recovery when the pedal-thrust group has no traction and when the bicycle is not braking;
- calculate, for a plurality of first states associated with the bicycle 100 during its movement, a plurality of trends of a first portion i°_{cyclist} of a motor nominal command signal I°ₘₒₜₒᵣ, as a function of the calculated values of the inversion speed vₗᵢₘᵢₜ and of the minimum value i_{rec,min};
- identify the first current state associated with the bicycle 100 during its movement, as a function of the value of a signal representative of an angular speed ω_{wheel} of the wheel and of the value of a signal representative of an angular speed ω_{free-wheel} of the free-wheel mechanism 105.
- select, from the plurality of trends of the first portion i°_{cyclist} of the motor nominal command signal I°ₘₒₜₒᵣ, the current trend of the first portion i°_{cyclist}, said current trend being associated with the identified first current state;
- calculate, for the selected trend of the first portion i°_{cyclist}, the current value of the first portion i°_{cyclist} of the motor nominal command signal I°ₘₒₜₒᵣ, as a function of the current value of the bicycle speed v;
- calculate the current value of a motor corrected command signal I°_{motor, corr} as a function of the first portion i°_{cyclist} and the state of charge SoC of the battery 106;
- drive the electric motor 101, using the calculated current value of the motor corrected command signal I°_{motor, corr};
- further repeat the calculation of the value of the inversion speed vₗᵢₘᵢₜ, the calculation of the minimum value i_{rec,min}, the calculation of the plurality of trends of the first portion i°_{cyclist} of the motor nominal command signal i°_{cyclist}, the identification of the first current state associated with the bicycle 100 during its movement, the selection of the current trend of the first portion i°_{cyclist} associated with the identified first current state, the calculation of the current value of the first portion i°_{cyclist} of the motor nominal command signal I°ₘₒₜₒᵣ, calculation of the current value of the motor corrected command signal I°_{motor, corr}, and the driving of the electric motor 101 using the calculated current value of the motor corrected command signal I°_{motor, corr}.

Preferably, the processing unit is configured to calculate the inversion speed by scaling the value of the inversion speed vₗᵢₘᵢₜ with a first coefficient χ that depends on the state of charge of the battery, wherein said first coefficient χ is equal to one for values of the state of charge SoC that are greater than a threshold value SoC° and it decreases towards a minimum value upon the decrease in the state of charge SoC until it reaches the minimum value for small and null values of the state of charge;moreover the processing unit is configured to calculate the minimum value i_{rec,min} by scaling the minimum value i_{rec,min} with a second coefficient ξ that depends on the state of charge of the battery, wherein said second coefficient ξ is equal to a minimum value for values of the state of charge SoC that are greater than the threshold value SoC° and it increases towards the value of one upon the decrease in the state of charge until it reaches the value of one for small and null values of the state of charge.

Preferably, said plurality of first states comprises at least two of the following states:
▪ Boost: it corresponds to a standing start or abrupt acceleration during the movement phase of the bicycle;
▪ No Traction: it corresponds to a condition in which, when the bicycle is moving, the speed of the free-wheel mechanism is lower than the speed of the wheel;
▪ Traction: corresponding to a condition in which the speed of the free-wheel mechanism is substantially equal to the speed of the bicycle wheel;
▪ Braking: it corresponds to a braking condition.

Preferably, the processing unit is configured to:
- identify the Traction state;
- select the trend of the first portion associated with the Traction state, said trend comprising:
   ▪ a first portion comprised between a null value of the speed of the bicycle and a defined value v_{curr,max}, wherein the first portion i°_{cyclist} of the motor nominal command signal gradually increases from the null value to a maximum value i_{boost,max};
   ▪ a second portion comprised between said defined value v_{curr,max} of the speed of the bicycle and the inversion speed value vₗᵢₘᵢₜ, wherein the second portion i°_{cyclist} of the motor nominal command signal gradually decreases until it reaches the null value;
   ▪ a third portion comprised between the inversion speed value vₗᵢₘᵢₜ and a maximum speed value v_{rech,max}, wherein the third portion i°_{cyclist} of the motor nominal command signal is negative until it reaches said minimum value i_{rec,min};
- a fourth portion greater than the maximum speed value v_{rech,max}, wherein the fourth portion i°_{cyclist} of the motor nominal command signal is substantially equal to said minimum value i_{rec,min}.

Preferably, the processing unit is configured to calculate the current value of the motor corrected command signal I°_{motor, corr}:
- in case wherein the value of the first portion i°_{cyclist} of the motor nominal command signal is positive, by scaling the first portion i°_{cyclist} of the nominal command signal for the motor with a third coefficient µ⁺ that depends on the battery state of charge, wherein the third coefficient µ⁺ is equal to one for values of the state of charge that are greater than the threshold value SoC°, whereas it decreases towards the null value for values lower than the threshold value SoC° until it becomes null for small and null values of the state of charge;
- in case wherein the value of the first portion i°_{cyclist} of the motor nominal command signal is negative, by scaling the first portion i°_{cyclist} of the motor nominal command signal with a fourth coefficient µ⁻ that depends on the battery state of charge, wherein the fourth coefficient µ⁻ is equal to one for values of the state of charge that are lower than the threshold value SoC°, whereas it decreases towards the null value for values greater than the threshold value SoC° until it reaches the null value at the full charge value.

It is also an object of the present invention an electrically pedal-assisted bicycle 100, comprising:
- a rechargeable battery 106;
- an electric motor 101 configured to operate as a motor supplied by the battery 106 or as an electric generator for recharging the battery 106;
- the electronic control system 1 as illustrated hereinabove.

## Claims

1. Adaptive system (1) to control a pedal-assisted bicycle (100) comprising an electric motor (101) configured to operate as a motor and as a generator associated with a wheel (102) of the bicycle (100), a rechargeable battery (106) having a power exchange relationship with the electric motor (101), a pedal-thrust group (103) to be pedaled by a cyclist, a transmission (104) operatively interposed between the pedal-thrust group (103) and a wheel (102) of the bicycle comprising a free-wheel mechanism (105), the system comprising:
- a sensor configured to generate a signal representative of an angular speed (ω_{wheel}) of a wheel (102) of the bicycle;
- a sensor configured to generate a signal representative of an angular speed (ω_{free-wheel}) of the free-wheel mechanism (105);
- a sensor configured to generate a signal representative of a state of charge (SoC) of the battery (106);
- a nominal control module (2) configured to generate a motor nominal command signal (I°ₘₒₜₒᵣ) based at least on said signals representative of the angular speed (ω_{wheel}) of the wheel (102) and of the angular speed (ω_{free-wheel}) of the free-wheel mechanism (105), wherein said motor nominal command signal (I°ₘₒₜₒᵣ) or a portion (i°_{cyclist}) thereof is defined by an inversion speed (vₗᵢₘᵢₜ) of the bicycle beneath which the motor (101) supplies an assistance to the pedal-thrust and above which the motor (101) operates as a generator when the moving bicycle is in a traction condition in which the speed of the wheel (102) of the bicycle is substantially equal to the speed of the free-wheel mechanism (105), and wherein said motor nominal command signal (I°ₘₒₜₒᵣ) or a portion (i°_{cyclist}) thereof is further defined by a maximum energy recovery value (i_{rec,min}) when the pedal-thrust group has no traction and when the bicycle is not braking;
- an adaptive control module (3) configured to:
• generate a motor corrected command signal (I°_{motor,corr}) determined from the motor nominal command signal (I°ₘₒₜₒᵣ) corrected based on the signal representative of the state of charge (SoC) of the battery (106);
wherein the adaptive control system (1) is further configured to supply to the motor (101) a reference command signal (I°_{ref}) determined based on said motor corrected command signal (I°_{motor,corr}) **characterized in that** the adaptive control module (1320,1323,1325) is further configured to modify said inversion speed and said maximum energy recovery value (Tc) of the motor nominal command signal or of a portion thereof based on the signal representative of the state of charge (SoC).

2. Adaptive system according to claim 1, wherein the adaptive control module (3) comprises a module (10) for correcting the parameters of the nominal control module (2), which is configured to modify said inversion speed (vₗᵢₘᵢₜ) and said maximum energy recovery value (i_{rec,min}) of the motor nominal command signal (I°ₘₒₜₒᵣ) or of a portion (i°_{cyclist}) thereof based on the signal representative of the state of charge (SoC), so that, as the state of charge decreases, the inversion speed (vₗᵢₘᵢₜ) decreases and the maximum energy recovery value (i_{rec,min}) of the motor nominal command signal (I°ₘₒₜₒᵣ) or of a portion (i°_{cyclist}) thereof increases in absolute value,
and as the state of charge increases, the inversion speed (vₗᵢₘᵢₜ) increases and the maximum energy recovery value (i_{rec,min}) of the motor nominal command signal (I°ₘₒₜₒᵣ) or of a portion (i°_{cyclist}) thereof reduces in absolute value.

3. Adaptive system according to claim 1 or 2, wherein the adaptive control module (3) comprises a module (9) for correcting the nominal command signal configured to modulate the motor nominal command signal (I°ₘₒₜₒᵣ) based on the signal representative of the state of charge (SoC) of the battery, such that the motor nominal command signal (I°ₘₒₜₒᵣ), when positive, decreases as the state of charge of the battery decreases, and, when negative, decreases in absolute value as the state of charge of the battery increases.

4. Adaptive system (1) according to claim 1, wherein the nominal control module (2) comprises a first finite state machine (6) configured to output the motor nominal command signal (I°ₘₒₜₒᵣ) or a first portion (i°_{cyclist}) of the motor nominal command signal (I°ₘₒₜₒᵣ), determined based on a state calculated as a function of at least the signal representative of the wheel angular speed (ω_{wheel}) and on the signal representative of the angular speed (ω_{free-wheel}) of the free-wheel mechanism,
wherein the first finite state machine (6) is configured to detect at least two of the following states:
- BOOST state: it corresponds to a standing start or to an abrupt acceleration during the movement phase of the bicycle, the state having finite duratione determinable based on the number of pedal-thrust turns or after exceeding a predefined threshold speed of the bicycle;
- NO TRACTION state: it corresponds to a condition wherin, when the bicycle is moving, the speed of the free-wheel mechanism is less than the speed of the wheel;
- TRACTION state: it corresponds to a condition wherein the speed of the free-wheel mechanism is equal, unless for a tolerance, to the speed of the bicycle wheel;
- BRAKING state: it corresponds to a braking condition of the bicycle,
wherein said bicycle inversion speed (vₗᵢₘᵢₜ) and said maximum energy recovery value (i_{rec,min}) without braking define the motor nominal command signal (I°ₘₒₜₒᵣ) or the first portion (i°_{cyclist}) thereof in the TRACTION state.

5. Adaptive system (1) according to any one of the previous claims, further comprising a sensor configured to generate a signal representative of the slope (ϑ̃) of the bicycle route,
wherein the nominal control module (2) further comprises a second finite state machine (7) configured to generate a second portion (i°ₛₗₒₚₑ) of the motor nominal command signal (I°ₘₒₜₒᵣ), said second portion (i°ₛₗₒₚₑ) being determined based on a state calculated as a function of the signal representative of the slope (ϑ̃),
wherein the motor nominal command signal (I°ₘₒₜₒᵣ) is equal to the sum of the first portion (i°_{cyclist}) generated by the first finite state machine (6) and of the second portion (i°ₛₗₒₚₑ) generated by the second finite state machine (7),
and wherein the second finite state machine (7) is configured to detect at least two of the following states:
- DOWNHILL: it corresponds to a condition in which the bicycle is moving along a downhill route;
- FLAT: it corresponds to a condition in which the bicycle is moving along a substantially flat route;
- UPHILL: it corresponds to a condition in which the bicycle is moving along an uphill route.

6. Adaptive system (1) according to any one of the previous claims, further comprising one or more saturation modules (8', 8", 8''') of the motor corrected command signal (I°_{motor,corr}), configured to generate a motor limit command signal (I°_{motor,lim}), obtained from the motor corrected command signal (I°_{motor,corr}) reduced in absolute value based on detected operating parameters of the electric motor (101) and/or of the battery (106),
wherein said one or more saturation modules (8', 8", 8''') of the motor corrected command signal (I°_{motor,corr}) comprise:
- a first saturation module (8') configured to reduce, in absolute value, the motor corrected command signal (I°_{motor,corr}) such that the voltage of the battery (106) is kept within a range comprised between a maximum limit value (Vcellₘₐₓ) and a minimum limit value (Vcellₘᵢₙ);
- a second saturation module (8") configured to reduce, in absolute value, the motor corrected command signal (I°_{motor,corr}) based on the signal representative of the angular speed (ω_{wheel}) of the wheel (102), the system further comprising a sensor configured to generate a signal representative of the temperature (T) of the motor, wherein said one or more saturation modules (8', 8", 8''') of the motor corrected command signal (I°_{motor,corr}) comprise a third saturation module (8''') configured to reduce the motor corrected command signal (I°_{motor,corr}), when the latter signal is positive, based on said signal representative of the temperature (T) of the motor (101).

7. Adaptive system (1) according to any one of the previous claims, comprising a filter (4) configured to filter the motor corrected command signal (I°_{motor,corr}) or the motor limit command signal (I°_{motor,lim}) and output a motor filtered command signal (I°_{motor,filtr}), wherein the reference command signal (I°_{ref}) coincides with said motor filtered command signal (I°_{motor,filtr}).

8. Adaptive system (1) according to any one of the previous claims, comprising a failure detecting module (5) configured to deactivate the motor (101) or to modulate the motor reference command signal (I°_{ref}) in the presence of detected failures in the system (1).

9. Electrically pedal-assisted bicycle (100), the bicycle comprising:
- a rechargeable battery (106);
- an electric motor (101) configured to operate as a motor supplied by the battery (106) or as an electric generator for recharging the battery (106);
- an adaptive system (1) according to any of the previous claims.

10. Method (200) for driving an electric motor (101) of a electrically pedal-assisted bicycle (100) by means of a rechargeable battery (106), the electric motor being configured to operate as a motor supplied by the battery or as an electric generator for recharging the battery, the bicycle comprising a free-wheel mechanism (105) associated with a wheel (102) of the bicycle, the method comprising the steps of:
a1) calculating (202) the value of a inversion speed (vₗᵢₘᵢₜ) as a function of a state of charge (SoC) of the battery (106), said inversion speed indicating the bicycle speed beneath which the electric motor operates as a motor to supply assistance to the pedal-thrust and above which the motor operates as a generator, when the moving bicycle is in a traction condition in which the speed of a wheel (102) of the bicycle is substantially equal to the speed of a free-wheel mechanism (105);
a2) calculating (202), as a function of the state of charge (SoC) of the battery (106), a minimum value (i_{rec,min}) corresponding to the maximum energy recovery when the pedal-thrust group has no traction and when the bicycle is not braking;
b) calculating (203), for a plurality of first states associated with the bicycle (100) during its movement, a plurality of trends of a first portion (i°_{cyclist}) of a motor nominal command signal (I°ₘₒₜₒᵣ), as a function of the calculated values of the inversion speed (vₗᵢₘᵢₜ) and of the minimum value (i_{rec,min}) ;
c1) identifying (204), as a function of the value of an angular speed (ω_{wheel}) of the wheel and of an angular speed (ω_{free-wheel}) of the free-wheel mechanism (105), the first current state associated with the bicycle (100) during its movement;
c2) selecting (204), out of the plurality of trends of the first portion (i°_{cyclist}) of the motor nominal command signal (I°ₘₒₜₒᵣ), the current trend of the first portion i°_{cyclist} associated with the identified first current state;
c3) calculating (204), for the selected trend of the first portion (i°_{cyclist}), the current value of the first portion (i°_{cyclist}) of the motor nominal command signal (I°ₘₒₜₒᵣ), as a function of the current value of the bicycle speed (v);
d) calculating (208, 209, 210) the current value of a motor corrected command signal (I°_{motor, corr}) as a function of the first portion (i°_{cyclist}) and of the state of charge (SoC) of the battery;
e) driving ((214) the electric motor (101) using the calculated current value of the motor corrected command signal (I°_{motor, corr}) ;
f) further repeating steps a1), a2), b), c1), c2), c3), d), e).

11. Method according to claim 10, wherein in step a1) the inversion speed is calculated by scaling the inversion speed value (vₗᵢₘᵢₜ) with a first coefficient (χ) that depends on state of charge of the battery, wherein the first coefficient (χ) is equal to one for values of the state of charge (SoC) that are greater than a threshold value (SoC°) and decreases towards a minimum value as the state of charge (SoC) decreases until it reaches the minimum value for small and null values of the state of charge,
and wherein in step a2) the minimum value (i_{rec,min}) is calculated by scaling the minimum value (i_{rec,min}) with a second coefficient (ξ) that depends on the state of charge of the battery, wherein the second coefficient (ξ) is equal to a minimum value for values of the state of charge (SoC) that are greater than the threshold value (SoC°) and it increases towards the value one as the state of charge decreases until it reaches the value of one for small and null values of the state of charge.

12. Method according to claims 10 or 11, wherein in step b) said plurality of first states comprises at least two of the following states:
▪ Boost: it corresponds to a standing start or abrupt acceleration during the movement phase of the bicycle;
▪ No traction: it corresponds to a condition in which, when the bicycle is moving, the speed of the free-wheel mechanism is less than the speed of the wheel;
▪ Traction: it corresponds to a condition in which the speed of the free-wheel mechanism is substantially equal to the speed of the bicycle wheel;
▪ Braking: it corresponds to a braking condition.

13. Method according to claim 12, wherein:
- step c1) comprises identifying the Traction state;
- step c2) comprises selecting the trend of a first portion associated with the Traction state, said trend comprising:
▪ a first portion comprised between a null value of the speed of the bicycle and a defined value (v_{curr,max}), wherein the first portion (i°_{cyclist}) of the motor nominal command signal gradually increases from the null value to a maximum value (i_{boost,max});
▪ a second portion comprised between said defined value (v_{curr,max}) of the speed of the bicycle and the inversion speed value (vₗᵢₘᵢₜ), wherein the first portion (i°_{cyclist}) of the motor nominal command signal gradually decreases until it reaches the null value;
▪ a third portion comprised between the inversion speed value (vₗᵢₘᵢₜ) and a maximum speed value (v_{rech,max}), wherein the third portion (i°_{cyclist}) of the motor nominal command signal is negative until it reaches said minimum value (i_{rec,min});
▪ a fourth portion greater than the maximum speed value (v_{rech,max}), wherein the fourth portion (i°_{cyclist}) of the motor nominal command signal is substantially equal to said minimum value (i_{rec,min}).

14. Method according to any of claims from 10 to 13, wherein in step d) the current value of the motor corrected command signal (I°_{motor, corr}) is calculated:
- in case wherein the value of the first portion (i°_{cyclist}) of the motor nominal command signal is positive, by scaling the first portion (i°_{cyclist}) of the motor nominal command signal with a third coefficient (µ⁺) that depends on the state of charge of the battery, wherein the third coefficient (µ⁺) is equal to one for values of the state of charge that are greater than the threshold value (SoC°), whereas it decreases towards the null value for values lower than the threshold value (SoC°) until it becomes null for small and null values of the state of charge;
- in case wherein the value of the first portion (i°_{cyclist}) of the motor nominal command signal is negative, by scaling the first portion (i°_{cyclist}) of the motor nominal command signal with a fourth coefficient (µ⁻) that depends on the battery state of charge, wherein the fourth coefficient (µ⁻) is equal to one for values of the state of charge that are lower than the threshold value (SoC°), whereas it decreases towards the null value for values greater than the threshold value (SoC°) until it reaches the null value at the full charge value.

15. Computer program comprising software code portions adapted to perform the steps of the method according to any of claims from 10 to 14, when said program is running on at least one computer.

## Patentansprüche

1. Adaptives System (1) zur Steuerung eines pedalunterstützten Fahrrads (100), umfassend einen Elektromotor (101), der ausgelegt ist, um als Motor und als Generator zu arbeiten, assoziiert mit einem Rad (102) des Fahrrads (100), eine aufladbare Batterie (106), aufweisend eine Leistungsaustauschbeziehung mit dem Elektromotor (101), eine Pedaltrittgruppe (103), die von einem Radfahrer getreten wird, einen Antrieb (104), der betriebswirksam zwischen der Pedaltrittgruppe (103) und einem Rad (102) des Fahrrads eingesetzt ist, umfassend einen Freilaufmechanismus (105), wobei das System umfasst:
- einen Sensor, der ausgelegt ist, um ein Signal zu generieren, das repräsentativ für eine Winkelgeschwindigkeit (ω_{wheel}) eines Rads (102) des Fahrrads ist;
- einen Sensor, der ausgelegt ist, um ein Signal zu generieren, das repräsentativ für eine Winkelgeschwindigkeit (ω_{free-wheel}) des Freilaufmechanismus (105) ist;
- einen Sensor, der ausgelegt ist, um ein Signal zu generieren, das repräsentativ für den Ladezustand (SoC) der Batterie (106) ist;
- ein nominales Steuerungsmodul (2), das ausgelegt ist, um ein Motornennbefehlssignal (I°ₘₒₜₒᵣ) zu generieren, basierend auf mindestens den Signalen, die repräsentativ für die Winkelgeschwindigkeit (ω_{wheel}) des Rads (102) und die Winkelgeschwindigkeit (ω_{free-wheel}) des Freilaufmechanismus (105) sind, wobei das Motornennbefehlssignal (I°ₘₒₜₒᵣ) oder ein Abschnitt (i°_{cyclist}) davon durch eine Umkehrgeschwindigkeit (V_{Limit}) des Fahrrads definiert ist, unter der der Motor (101) den Pedaltritt unterstützt und über der der Motor (101) als Generator arbeitet, wenn sich das fahrende Fahrrad in einem Antriebszustand befindet, in dem die Geschwindigkeit das Rads (102) des Fahrrads im Wesentlichen gleich der Geschwindigkeit des Freilaufmechanismus (105) ist und wobei das Motornennbefehlssignal (I°ₘₒₜₒᵣ) oder ein Abschnitt (i°_{cyclist}) davon zudem durch einen maximalen Energierückgewinnungswert (i_{rec,min}) definiert ist, wenn die Pedaltrittgruppe keinen Antrieb hat und wenn das Fahrrad nicht bremst;
- ein adaptives Steuerungsmodul (3), das ausgelegt ist, um
• ein motorkorrigiertes Befehlssignal (I°_{motor,korr}) zu generieren, das durch den korrigierten Motornennbefehl bestimmt wird, basierend auf dem Signal, das repräsentativ für den Ladezustand (SoC) der Batterie (106) ist,
wobei das adaptive Steuerungssystem (1) zudem ausgelegt ist, um dem Motor (101) ein Referenzbefehlssignal (I°_{ref}) zu übermitteln, das basierend auf dem motorkorrigierten Befehlssignal (I°_{motor,corr}) bestimmt wird, **dadurch gekennzeichnet, dass** das adaptive Steuerungsmodul (1320, 1323, 1325) zudem ausgelegt ist, um die Umkehrgeschwindigkeit und den maximalen Energierückgewinnungswert (Tc) des Motornennbefehlssignals oder eines Abschnitts davon basierend auf dem Signal zu verändern, das repräsentativ für den Ladezustand (SoC) ist.

2. Adaptives System nach Anspruch 1, wobei das adaptive Steuerungsmodul (3) ein Modul (10) umfasst, um die Parameter des Nennsteuermoduls (2) zu korrigieren, das ausgelegt ist, um die Umkehrgeschwindigkeit (vₗᵢₘᵢₜ) und den maximalen Energierückgewinnungswert (i_{rec,min}) des Motornennbefehlssignals (I°ₘₒₜₒᵣ) oder eines Abschnitts (i°_{cyclist}) davon basierend auf dem Signal zu verändern, das repräsentativ für den Ladezustand (SoC) ist, sodass der Ladezustand abnimmt, die Umkehrgeschwindigkeit (vₗᵢₘᵢₜ) abnimmt und sich der maximale Energierückgewinnungswert (i_{rec,min}) des Motornennbefehlssignals (I°ₘₒₜₒᵣ) oder eines Abschnitts (i°_{cyclist}) davon in absoluten Werten erhöht,
wobei sich mit zunehmendem Ladezustand die Umkehrgeschwindigkeit (vₗᵢₘᵢₜ) erhöht und der maximale Energierückgewinnungswert (i_{rec,min}) des Motornennbefehlssignals (I°ₘₒₜₒᵣ) oder eines Abschnitts (i°_{cyclist}) davon in absoluten Werten abnimmt.

3. Adaptives System nach Anspruch 1 oder 2, wobei das adaptive Steuerungsmodul (3) ein Modul (9) umfasst, um das Motornennbefehlssignal zu korrigieren, ausgelegt, um das Motornennbefehlssignal (I°ₘₒₜₒᵣ) basierend auf dem Signal zu regeln, das repräsentativ für den Ladezustand (SoC) der Batterie ist, sodass das Motornennbefehlssignal (I°ₘₒₜₒᵣ), wenn positiv, abnimmt, wenn der Ladezustand der Batterie abnimmt, und wenn negativ, in absoluten Werten abnimmt, wenn sich der Ladezustand der Batterie erhöht.

4. Adaptives System (1) nach Anspruch 1, wobei das nominale Steuerungsmodul (2) eine erste Zustandsmaschine (6) umfasst, die ausgelegt ist, um das Motornennbefehlssignal (I°ₘₒₜₒᵣ) oder einen ersten Abschnitt (i°_{cyclist}) des Motornennbefehlssignals (I°ₘₒₜₒᵣ) auszugeben, bestimmt basierend auf einem Zustand, der als eine Funktion von mindestens dem Signal berechnet wird, das repräsentativ für die Radwinkelgeschwindigkeit (ω_{wheel}) ist, und auf dem Signal, das repräsentativ für die Winkelgeschwindigkeit (ω_{free-wheel}) des Freilaufmechanismus ist,
wobei die erste Zustandsmaschine (6) ausgelegt ist, um mindestens zwei der folgenden Zustände zu erfassen:
- BOOST-Zustand, der einem Start aus dem Stand oder einer plötzlichen Beschleunigung während der Bewegungsphase des Fahrrads entspricht, wobei der Zustand eine endliche Dauer aufweist, die basierend auf der Anzahl der Pedaltrittumdrehung oder nach dem Überschreiten einer vorgegebenen Schwellengeschwindigkeit des Fahrrads bestimmbar ist;
- ANTRIEBSLOSER ZUSTAND, der einem Zustand entspricht, in dem das Fahrrad fährt und die Geschwindigkeit des Freilaufmechanismus geringer ist als die Geschwindigkeit des Rads;
- ANTRIEBSZUSTAND, der einem Zustand entspricht, in dem die Geschwindigkeit des Freilaufmechanismus abgesehen von einem Toleranzwert gleich der Geschwindigkeit des Fahrradrads ist;
- BREMSZUSTAND, der einem Bremszustand des Fahrrads entspricht,
wobei die Fahrradumkehrgeschwindigkeit (Vₗᵢₘᵢₜ) und der maximale Energierückgewinnungswert (i_{rec,min}) ohne Bremsen das Motornennbefehlssignal (I°ₘₒₜₒᵣ) oder den ersten Abschnitt (i°_{cyclist}) davon im ANTRIEBSZUSTAND definieren.

5. Adaptives System (1) nach einem der vorhergehenden Ansprüche, zudem umfassend einen Sensor, der ausgelegt ist, um ein Signal zu generieren, das repräsentativ für die Steigung (ϑ̃) der Fahrradroute ist,
wobei das nominale Steuerungsmodul (2) zudem eine zweite Zustandsmaschine (7) umfasst, die ausgelegt ist, um einen zweiten Abschnitt (i°ₛₗₒₚₑ) des Motornennbefehlssignals (I°ₘₒₜₒᵣ) zu generieren, wobei der zweite Abschnitt (i°ₛₗₒₚₑ) basierend auf einem Zustand ermittelt wird, berechnet als eine Funktion des Signals, das repräsentativ für die Steigung (ϑ̃) ist, wobei das Motornennbefehlssignal (I°ₘₒₜₒᵣ) gleich der Summe des ersten Abschnitts (i°_{cyclist)}, generiert von der ersten Zustandsmaschine (6), und des zweiten Abschnitts (i°ₛₗₒₚₑ₎, generiert von der zweiten Zustandsmaschine (7), ist,
wobei die zweite Zustandsmaschine (7) ausgelegt ist, um mindestens zwei der folgenden Zustände zu erfassen:
- BERGAB, was einem Zustand entspricht, in dem sich das Fahrrad auf einer bergab führenden Strecke bewegt;
- EBEN, was einem Zustand entspricht, in dem sich das Fahrrad auf einer im Wesentlichen ebenen Strecke bewegt;
- BERGAUF, was einem Zustand entspricht, in dem sich das Fahrrad auf einer bergauf führenden Strecke bewegt.

6. Adaptives System (1) nach einem der vorhergehenden Ansprüche, zudem umfassend ein oder mehrere Sättigungsmodule (8', 8", 8''') des motorkorrigierten Befehlssignals (I°_{motor,corr)}, ausgelegt, um ein Motorgrenzbefehlssignal (I°_{motor,lim}) zu generieren, erhalten vom motorkorrigierten Befehlssignal (I°_{motor, corr}), reduziert in absoluten Werten basierend auf erfassten Betriebsparametern des Elektromotors (101) und/oder der Batterie (106),
wobei das eine oder die mehreren Sättigungsmodule (8', 8", 8''') des motorkorrigierten Befehlssignals (I°_{motor,corr}) umfassen:
- ein erstes Sättigungsmodul (8'), das ausgelegt ist, um das motorkorrigierte Befehlssignal (I°_{motor,corr}) in absoluten Werten zu reduzieren, sodass die Spannung der Batterie (106) in einem Bereich zwischen einem maximalen Grenzwert (Vcellₘₐₓ) und einem Mindestgrenzwert (Vcellₘᵢₙ) gehalten wird;
- ein zweites Sättigungsmodul (8"), das ausgelegt ist, um das motorkorrigierte Befehlssignal (I°_{motor,corr}) in absoluten Werten basierend auf dem Signal zu reduzieren, das repräsentativ für die Winkelgeschwindigkeit (ω_{wheel}) des Rads (102) ist,
wobei das System zudem einen Sensor umfasst, der ausgelegt ist, um ein Signal zu generieren, das repräsentativ für die Temperatur (T) des Motors ist, wobei das eine oder die mehreren Sättigungsmodule (8', 8", 8''') des motorkorrigierten Befehlssignals (I°_{motor,corr}) ein drittes Sättigungsmodul (8") umfassen, das ausgelegt ist, um das motorkorrigierte Befehlssignal (I°_{motor,corr)} zu reduzieren, wenn das letztgenannte Signal positiv ist, basierend auf dem Signal, das repräsentativ für die Temperatur (T) des Motors (101) ist.

7. Adaptives System (1) nach einem der vorhergehenden Ansprüche, umfassend einen Filter (4), der ausgelegt ist, um das motorkorrigierte Befehlssignal (I°_{motor,corr}) oder das Motorgrenzbefehlssignal (I°_{Motor,lim}) zu filtern und ein motorgefiltertes Befehlssignals (I°_{Motor,filt}) auszugeben, wobei das Referenzbefehlssignal mit dem motorgefilterten Befehlssignal (I°_{motor,filt}) übereinstimmt.

8. Adaptives System (1) nach einem der vorhergehenden Ansprüche, umfassend ein Fehlererfassungsmodul (5), das ausgelegt ist, um den Motor (101) zu deaktivieren oder das Motorreferenzbefehlssignal (I°_{ref}) bei der Erfassung von Fehlern im System (1) zu regeln.

9. Pedalunterstütztes E-Fahrrad (100), wobei das Fahrrad umfasst:
- eine aufladbare Batterie (106);
- einen Elektromotor (101), der ausgelegt ist, um als ein von der Batterie (106) gespeister Motor oder als elektrischer Generator zum Aufladen der Batterie (106) zu arbeiten;
- ein adaptives System (1) nach einem der vorhergehenden Ansprüche.

10. Verfahren (200) zum Ansteuern eines Elektromotors (101) eines pedalunterstützten E-Fahrrads (100) mittels einer aufladbaren Batterie (106), wobei der Elektromotor ausgelegt ist, um als ein von der Batterie gespeister Motor oder als elektrischer Generator zum Aufladen der Batterie zu arbeiten, wobei das Fahrrad einen Freilaufmechanismus (105) umfasst, der mit einem Rad (102) des Fahrrads assoziiert ist, wobei das Verfahren die Schritte umfasst:
a1) Berechnen (202) des Werts einer Umkehrgeschwindigkeit (vₗᵢₘᵢₜ) als eine Funktion eines Ladezustands (SoC) der Batterie (106), wobei die Umkehrgeschwindigkeit die Fahrradgeschwindigkeit angibt, unter der der Elektromotor als ein Motor zur Unterstützung des Pedaltritts arbeitet, und über der der Motor als ein Generator arbeitet, wenn das fahrende Fahrrad in einem Antriebszustand ist, in dem die Geschwindigkeit eines Rads (102) des Fahrrads im Wesentlichen gleich der Geschwindigkeit eines Freilaufmechanismus (105) ist;
a2) Berechnen (202) eines Mindestwerts (i_{rec,min}) als eine Funktion des Ladezustands (Soc) der Batterie (106), der der maximalen Energierückgewinnung entspricht, wenn die Pedaltrittgruppe keinen Antrieb hat und wenn das Fahrrad nicht bremst;
b) Berechnen (203) einer Vielzahl an Trends eines ersten Abschnitts (i°_{cyclist}) des Motornennbefehlssignals (I°ₘₒₜₒᵣ) für eine Vielzahl von ersten Zuständen, die mit dem Fahrrad (100) während dessen Bewegung assoziiert sind, als eine Funktion der berechneten Werte der Umkehrgeschwindigkeit (vₗᵢₘᵢₜ) und des Mindestwerts (i_{rec,min}) ;
c1) Identifizieren (204) des ersten aktuellen Zustands, der mit dem Fahrrad (100) während dessen Bewegung assoziiert ist, als eine Funktion des Werts einer Winkelgeschwindigkeit (ω_{wheel}) des Rads und einer Winkelgeschwindigkeit (ω_{free-wheel}) des Freilaufmechanismus (105);
c2) Auswählen (204) des aktuellen Trends des ersten Abschnitts (i°_{cyclist)}, der mit dem identifizierten ersten aktuellen Zustand assoziiert ist, aus einer Vielzahl an Trends des ersten Abschnitts (i°_{cyclist}) des Motornennbefehlssignals (I°ₘₒₜₒᵣ);
c3) Berechnen (204) des aktuellen Werts des ersten Abschnitts (i°_{cyclist}) des Motornennbefehlssignals (I°ₘₒₜₒᵣ) für den ausgewählten Trend des ersten Abschnitts (i°_{cyclist}) als eine Funktion des aktuellen Werts der Fahrradgeschwindigkeit (v);
d) Berechnen des aktuellen Werts (208, 209, 210) eines motorkorrigierten Befehlssignals (I°_{motor,corr}) als eine Funktion des ersten Abschnitts (i°_{cyclist}) und des Ladezustands (SoC) der Batterie;
e) Ansteuern (214) des Elektromotors (101) unter Nutzung des berechneten aktuellen Werts des motorkorrigierten Befehlssignals (I°_{motor,corr)};
f) weiteres Wiederholen der Schritte a1), a2), b), c1), c2), c3), d), e).

11. Verfahren nach Anspruch 10, wobei die Umkehrgeschwindigkeit in Schritt a1) durch das Skalieren des Umkehrgeschwindigkeitswerts (vₗᵢₘᵢₜ) mit einem ersten Koeffizienten (χ) berechnet wird, der vom Ladezustand der Batterie abhängt, wobei der erste Koeffizient (χ) gleich eins für Werte des Ladezustands (SoC) ist, die größer sind als ein Schwellenwert (SoC°) und bis zu einem Mindestwert abnimmt, wenn der Ladezustand (SoC) abnimmt, bis er den Mindestwert für kleine und Nullwerte des Ladezustands erreicht,
und wobei der Mindestwert (i_{rec,min}) in Schritt a2) durch Skalieren des Mindestwerts mit einem zweiten Koeffizienten (ξ) berechnet wird, der vom Ladezustand der Batterie abhängt, wobei der zweite Koeffizient (ξ) gleich einem Mindestwert für Werte des Ladezustands (SoC) ist, die größer sind als der Schwellenwert (SoC°) und bis zum Wert eins steigt, wenn der Ladezustand abnimmt, bis er die Werte von eins für kleine und Nullwerte des Ladezustands erreicht.

12. Verfahren nach Anspruch 10 oder 11, wobei die Vielzahl an ersten Zuständen in Schritt b) mindestens zwei der folgenden Zustände umfasst:
• BOOST-Zustand, der einem Start aus dem Stand oder einer plötzlichen Beschleunigung während der Bewegungsphase des Fahrrads entspricht;
• antriebsloser Zustand, der einem Zustand entspricht, in dem das Fahrrad fährt und die Geschwindigkeit des Freilaufmechanismus geringer ist als die Geschwindigkeit des Rads;
• Antriebszustand, der einem Zustand entspricht, in dem die Geschwindigkeit des Freilaufmechanismus im Wesentlichen gleich der Geschwindigkeit des Fahrradrads ist;
• Bremszustand, der einem Bremszustand entspricht.

13. Verfahren nach Anspruch 12, wobei
- Schritt c1) das Identifizieren des Antriebszustands umfasst;
- Schritt c2) das Auswählen des Trends eines ersten Abschnitts umfasst, der mit dem Antriebszustand assoziiert ist, wobei dieser Trend umfasst:
• einen ersten Abschnitt, der zwischen einem Nullwert der Geschwindigkeit des Fahrrads und einem definierten Wert (v_{curr,max}) enthalten ist, wobei der erste Abschnitt (i°_{cyclist}) des Motornennbefehlssignals stufenweise vom Nullwert bis zu einem Höchstwert (i_{boost,max}) erhöht wird;
• einen zweiten Abschnitt, der zwischen dem definierten Wert (V_{curr,max}) der Fahrradgeschwindigkeit und dem Umkehrgeschwindigkeitswert (vₗᵢₘᵢₜ) enthalten ist, wobei der erste Abschnitt (i°_{cyclist}) des Motornennbefehlssignals stufenweise abnimmt, bis er den Nullwert erreicht;
• einen dritten Abschnitt, der zwischen dem Umkehrgeschwindigkeitswert (vₗᵢₘᵢₜ) und einem Höchstgeschwindigkeitswert (v_{rech,max}) enthalten ist, wobei der dritte Abschnitt (i°_{cyclist}) des Motornennbefehlssignals negativ ist, bis er den Mindestwert (i_{rec,min}) erreicht;
• einen vierten Abschnitt, der größer als der Höchstgeschwindigkeitswert (V_{rech,max}) ist, wobei der vierte Abschnitt (i°_{cyclist}) des Motornennbefehlssignals im Wesentlichen gleich dem Mindestwert (i_{rec,min}) ist.

14. Verfahren nach einem der Ansprüche 10 bis 13, wobei der aktuelle Wert des motorkorrigierten Befehlssignals (I°_{motor,corr}) in Schritt d) wie folgt berechnet wird:
- Wenn der Wert des ersten Abschnitts (i°_{cyclist}) des Motornennbefehlssignals positiv ist durch Skalieren des ersten Abschnitts (i°_{cyclist}) des Motornennbefehlssignals mit einem dritten Koeffizienten (µ⁺), der vom Ladezustand der Batterie abhängt, wobei der dritte Koeffizient (µ⁺) gleich eins für Werte des Ladezustands ist, die größer sind als der Schwellenwert (SoC), wobei er bis zum Nullwert abnimmt, für Werte die geringer sind als der Schwellenwert (SoC), bis er für kleine und Nullwerte des Ladezustands null wird;
- Wenn der Wert des ersten Abschnitts (i°_{cyclist}) des Motornennbefehlssignals negativ ist durch Skalieren des ersten Abschnitts (i°_{cyclist}) des Motornennbefehlssignals mit einem vierten Koeffizienten (µ⁻), der vom Batterieladezustand abhängt, wobei der vierte Koeffizient (µ⁻) gleich eins für Werte des Ladezustands ist, die geringer sind als der Schwellenwert (SoC°), wobei er bis zum Nullwert abnimmt für Werte, die größer sind als der Schwellenwert (SoC°), bis er den Nullwert bei vollem Ladewert erreicht.

15. Computerprogramm, umfassend Softwarecodeabschnitte, ausgelegt, um die Schritte des Verfahrens nach einem der Ansprüche 10 bis 14 durchzuführen, wenn das Programm auf mindestens einem Computer ausgeführt wird.

## Revendications

1. Système adaptatif (1) de commande de bicyclette (100) à assistance au pédalage comprenant un moteur électrique (101), configuré pour fonctionner comme un moteur et comme un générateur, associé à une roue (102) de la bicyclette (100), une batterie rechargeable (106) ayant une relation d'échange énergétique avec le moteur électrique (101), un groupe (103) de poussée du pédalage à pédaler par un cycliste, une transmission (104) fonctionnellement interposée entre le groupe (103) de poussée du pédalage et une roue (102) de la bicyclette comprenant un mécanisme à roue libre (105), le système comprenant :
- un capteur configuré pour générer un signal représentatif d'une vitesse angulaire (ω_{wheel}) d'une roue (102) de la bicyclette ;
- un capteur configuré pour générer un signal représentatif d'une vitesse angulaire (ω_{free-wheel}) du mécanisme à roue libre (105) ;
- un capteur configuré pour générer un signal représentatif d'un état de charge (SoC) de la batterie (106) ;
- un module de commande nominale (2) configuré pour générer un signal de commande nominale du moteur (I°ₘₒₜₒᵣ) basé au moins sur lesdits signaux représentatifs de la vitesse angulaire (ω_{wheel}) de la roue (102) et de la vitesse angulaire (ω_{free-wheel}) du mécanisme à roue libre (105), dans lequel ledit signal de commande nominale du moteur (I°ₘₒₜₒᵣ) ou une partie (i°_{cyclist}) de celui-ci est définie par une vitesse d' inversion (Vₗᵢₘᵢₜ) de la bicyclette sous laquelle le moteur (101) fournit une assistance à la poussée du pédalage et sous laquelle le moteur (101) fonctionne comme un générateur lorsque la bicyclette en mouvement se trouve dans une condition de traction dans laquelle la vitesse de la roue (102) de la bicyclette est substantiellement égale à la vitesse du mécanisme à roue libre (105), et dans lequel ledit signal de commande nominale du moteur (I°ₘₒₜₒᵣ) ou une partie (i°_{cyclist}) de celui-ci est de plus défini par une valeur maximum de récupération d'énergie (i_{rec,min}) en l'absence de traction du groupe de poussée du pédalage et lorsque la bicyclette ne freine pas ;
- un module adaptatif (3) de commande configuré pour :
• générer un signal de commande corrigé du moteur (I°_{motor,corr}) déterminé à partir du signal de la commande nominale du moteur (I°ₘₒₜₒᵣ) corrigée basé sur le signal représentatif d'un état de charge (SoC) de la batterie (106) ;
dans lequel le système adaptatif (1) de commande est de plus configuré pour fournir au moteur (101) un signal de commande de référence (I°_{ref}) déterminé sur la base dudit signal de commande corrigé du moteur (I°_{motor,corr}), **caractérisé en ce que** le module adaptatif (1320, 1323, 1325) de commande est de plus configuré pour modifier ladite vitesse d'inversion et ladite valeur maximum de récupération d'énergie (Tc) du signal de commande nominale du moteur ou d'une partie de celui-ci sur la base du signal représentatif de l'état de charge (SoC).

2. Système adaptatif selon la revendication 1, dans lequel le module adaptatif (3) de commande comprend un module (10), servant à corriger les paramètres du module de commande nominale (2), étant configuré pour modifier ladite vitesse d'inversion (vₗᵢₘᵢₜ) et ladite valeur maximum de récupération d'énergie (i_{rec,min}) du signal de commande nominale du moteur (I°ₘₒₜₒᵣ) ou d'une partie (i°_{cyclist}) de celui-ci sur la base du signal représentatif de l'état de charge (SoC), de sorte que, à mesure que l'état de charge diminue, la vitesse d'inversion (vₗᵢₘᵢₜ) diminue et la valeur maximum de récupération d' énergie (i_{rec,min}) du signal de commande nominale du moteur (I°ₘₒₜₒᵣ) ou d'une partie (i°_{cyclist}) de celui-ci augmente en valeur absolue,
et à mesure que l'état de charge augmente, la vitesse d'inversion (vₗᵢₘᵢₜ) augmente et la valeur maximum de récupération d' énergie (i_{rec,min}) du signal de commande nominale du moteur (I°ₘₒₜₒᵣ) ou d'une partie (i°_{cyclist}) de celui-ci diminue en valeur absolue.

3. Système adaptatif selon la revendication 1 ou 2, dans lequel le module de commande (3) adaptatif comprend un module (9) servant à corriger le signal de commande nominale configuré pour moduler le signal de commande nominale du moteur (I°ₘₒₜₒᵣ) sur la base du signal représentatif de l'état de charge (SoC) de la batterie, de sorte que le signal de commande nominale du moteur (I°ₘₒₜₒᵣ), lorsqu'il est positif, diminue à mesure que l'état de charge de la batterie diminue, et, lorsqu'il est négatif, diminue en valeur absolue à mesure que l'état de charge de la batterie augmente.

4. Système adaptatif (1) selon la revendication 1, dans lequel le module de commande nominale (2) comprend une première machine (6) à états finis configurée pour émettre le signal de commande nominale du moteur (I°ₘₒₜₒᵣ) ou une première partie (i°_{cyclist}) du signal de commande nominale du moteur (I°ₘₒₜₒᵣ), déterminés sur la base d'un état calculé en fonction de d'au moins le signal représentatif de la vitesse angulaire de la roue (ω_{wheel}) et du signal représentatif de la vitesse angulaire (ω_{free-wheel}) du mécanisme à roue libre,
dans lequel la première machine (6) à états finis est configurée pour détecter au moins deux des états suivants :
- état de POUSSÉE : il correspond à un départ à l'arrêt ou à une accélération brutale pendant la phase de déplacement de la bicyclette, l'état ayant une durée finie pouvant être déterminée sur la base du nombre de tours de poussée de pédalage ou après avoir dépassé une vitesse seuil prédéfinie de la bicyclette ;
- état D'ABSENCE DE TRACTION : il correspond à une condition dans laquelle, lorsque la bicyclette se déplace, la vitesse du mécanisme à roue libre est inférieure à la vitesse de la roue ;
- état de TRACTION : il correspond à une condition dans laquelle la vitesse du mécanisme à roue libre est égale, sauf pour une tolérance, à la vitesse de la roue de bicyclette ;
- état de FREINAGE : il correspond à une condition de freinage de la bicyclette,
dans laquelle ladite vitesse d'inversion (Vₗᵢₘᵢₜ) de la bicyclette et ladite valeur maximum de récupération d'énergie (i_{rec,min}) sans freinage définissent le signal de commande nominale du moteur (I°ₘₒₜₒᵣ) ou la première partie (i°_{cyclist}) de celui-ci dans l'état de TRACTION.

5. Système adaptatif (1) selon l'une quelconque des revendications précédentes, comprenant de plus un capteur configuré pour générer un signal représentatif de la pente (*ϑ̃*) du parcours de la bicyclette,
dans lequel le module de commande nominale (2) comprend de plus une seconde machine (7) à états finis configurée pour générer une seconde partie (i°ₛₗₒₚₑ) du signal de commande nominale du moteur (I°ₘₒₜₒᵣ), ladite seconde partie (i°ₛₗₒₚₑ) étant déterminée sur la base d'un état calculé en fonction du signal représentatif de la pente (*ϑ̃*),
dans lequel le signal de commande nominale du moteur (I°ₘₒₜₒᵣ) est égal à la somme de la première partie (i°_{cyclist}) générée par la première machine (6) à états finis et de la seconde partie (i°ₛₗₒₚₑ) générée par la seconde machine (7) à états finis,
dans lequel la seconde machine (7) à états finis est configurée pour détecter au moins deux des états suivants :
- DESCENTE : il correspond à une condition dans laquelle la bicyclette se déplace le long d'un parcours en descente ;
- PLAT : il correspond à une condition dans laquelle la bicyclette se déplace le long d'un parcours substantiellement plat ;
- MONTÉE : il correspond à une condition dans laquelle la bicyclette se déplace le long d'un parcours en montée ;

6. Système adaptatif (1) selon l'une quelconque des revendications précédentes, comprenant de plus un ou plusieurs modules de saturation (8', 8", 8''') du signal de commande corrigé du moteur (I°_{motor,corr}), configurés pour générer un signal de commande limite du moteur (I°_{motor,lim}) obtenu à partir du signal de commande corrigé du moteur (I°_{motor,corr}) réduit en valeur absolue sur la base des paramètres de fonctionnement détectés du moteur électrique (101) et/ou de la batterie (106), dans lequel lesdits un ou plusieurs modules de saturation (8', 8", 8''') du signal de commande corrigé du moteur (I°_{motor,corr}) comprennent :
- un premier module de saturation (8') configuré pour réduire, en valeur absolue, le signal de commande corrigé du moteur (I°_{motor,corr}) de sorte que la tension de la batterie (106) soit maintenue dans un intervalle compris entre une valeur limite maximum (Vcellₘₐₓ) et une valeur limite minimum (Vcellₘᵢₙ) ;
- un second module de saturation (8'') configuré pour réduire, en valeur absolue, le signal de commande corrigé du moteur (I°_{motor,corr}) sur la base du signal représentatif de la vitesse angulaire (ω_{wheel}) de la roue (102),
le système comprenant de plus un capteur configuré pour générer un signal représentatif de la température (T) du moteur, dans lequel lesdits un ou plusieurs modules de saturation (8', 8", 8''') du signal de commande corrigé du moteur (I°_{motor,corr}) comprennent un troisième module de saturation (8''') configuré pour réduire le signal de commande corrigé du moteur (I°_{motor,corr}) lorsque le dernier signal est positif, sur la base dudit signal représentatif de la température (T) du moteur (101).

7. Système adaptatif (1) selon l'une quelconque des revendications précédentes, comprenant un filtre (4) configuré pour filtrer le signal de commande corrigé du moteur (I°_{motor,corr}) ou le signal de commande limite du moteur (I°_{motor,lim}) et émettre un signal de commande filtré du moteur (I°_{motor,filtr}), dans lequel le signal de commande de référence (I°_{ref}) coïncide avec ledit signal de commande filtré du moteur (I°_{motor,filtr}).

8. Système adaptatif (1) selon l'une quelconque des revendications précédentes, comprenant un module de détection de pannes (5) configuré pour désactiver le moteur (101) ou pour moduler le signal de commande de référence du moteur (I°_{ref}) en présence de pannes détectées dans le système (1).

9. Bicyclette électrique à assistance au pédalage (100), la bicyclette comprenant :
- une batterie rechargeable (106) ;
- un moteur électrique (101) configuré pour fonctionner comme un moteur alimenté par la batterie (106) ou comme un générateur électrique pour recharger la batterie (106) ;
- un système adaptatif (1) selon l'une quelconque des revendications précédentes.

10. Procédé (200) servant à actionner un moteur électrique (101) d'une bicyclette électrique à assistance au pédalage (100) au moyen d'une batterie rechargeable (106), le moteur électrique étant configuré pour fonctionner comme un moteur alimenté par la batterie ou comme un générateur électrique pour recharger la batterie, la bicyclette comprenant un mécanisme à roue libre (105) associé à une roue (102) de la bicyclette, le procédé comprenant les étapes de :
al) calculer (202) la valeur d'une vitesse d'inversion (vₗᵢₘᵢₜ) en fonction d'un état de charge (SoC) de la batterie (106), ladite vitesse d'inversion indiquant la vitesse de la bicyclette sous laquelle le moteur électrique fonctionne comme un moteur pour fournir de l'assistance à la poussée de pédalage et au-dessus de laquelle le moteur fonctionne comme un générateur lorsque la bicyclette en mouvement se trouve dans une condition de traction dans laquelle la vitesse d'une roue (102) de la bicyclette est substantiellement égale à la vitesse d'un mécanisme à roue libre (105) ;
a2) calculer (202), en fonction de l'état de charge (SoC) de la batterie (106), une valeur minimum (i_{rec,min}) correspondant à la récupération d'énergie maximum en l'absence de traction du groupe de poussée du pédalage et lorsque la bicyclette ne freine pas ;
b) calculer (203), pour une pluralité de premiers états associés à la bicyclette (100) pendant son déplacement, une pluralité de tendances d'une première partie (i°_{cyclist}) d'un signal de commande nominale du moteur (I°ₘₒₜₒᵣ), en fonction des valeurs calculées de la vitesse d'inversion (vₗᵢₘᵢₜ) et de la valeur minimum (i_{rec,min}) ;
c1) identifier (204), en fonction de la valeur d'une vitesse angulaire (ω_{wheel}) de la roue et d'une vitesse angulaire (ω_{free-wheel}) du mécanisme à roue libre (105), le premier état actuel associé à la bicyclette (100) durant son déplacement ;
c2) sélectionner (204), hors de la pluralité de tendances de la première partie (i°_{cyclist}) du signal de commande nominale du moteur (I°ₘₒₜₒᵣ), la tendance actuelle de la première partie (i°_{cyclist}) associée au premier état actuel identifié ;
c3) calculer (204), pour la tendance sélectionnée de la première partie (i°_{cyclist}), la valeur actuelle de la première partie (i°_{cyclist}) du signal de commande nominale du moteur (I°ₘₒₜₒᵣ), en fonction de la valeur actuelle de la vitesse (v) de la bicyclette ;
d) calculer (208, 209, 210) la valeur actuelle d'un signal de commande corrigé du moteur (I°_{motor,corr}) en fonction de la première partie (i°_{cyclist}) et de l'état de charge (SoC) de la batterie ;
e) actionner ((214) le moteur électrique (101) en utilisant la valeur actuelle calculée du signal de commande corrigé du moteur (I°_{motor,corr}) ;
f) répéter à nouveau les étapes a1), a2), b), c1), c2), c3), d) et e).

11. Procédé selon la revendication 10, dans lequel à l'étape a1), la vitesse d'inversion est calculée en mettant à l'échelle la valeur de vitesse d'inversion (vₗᵢₘᵢₜ) avec un premier coefficient (χ) dépendant de l'état de charge de la batterie, dans lequel le premier coefficient (χ) est égal à un pour des valeurs de l'état de charge (SoC) étant supérieures à une valeur seuil (SoC°) et diminue vers une valeur minimum à mesure que l'état de charge (SoC) diminue jusqu'à ce qu'il atteigne la valeur minimum pour des valeurs petites ou nulles de l'état de charge,
et dans lequel à l'étape a2), la valeur minimum (i_{rec,min}) est calculée en mettant à l'échelle la valeur minimum (i_{rec,min}) avec un second coefficient (ξ) dépendant de l'état de charge de la batterie, dans lequel le second coefficient (ξ) est égal à une valeur minimum pour des valeurs de l'état de charge (SoC) étant supérieures à une valeur seuil (SoC°) et augmente vers la valeur une à mesure que l'état de charge diminue jusqu'à ce qu'il atteigne la valeur de un pour des valeurs petites ou nulles de l'état de charge.

12. Procédé selon la revendication 10 ou 11, dans lequel à l'étape b), ladite pluralité des premiers états comprend au moins deux des états suivants :
• Poussée : il correspond à un départ à l'arrêt ou à une accélération brutale pendant la phase de déplacement de la bicyclette ;
- Absence de traction : il correspond à une condition dans laquelle, lorsque la bicyclette se déplace, la vitesse du mécanisme à roue libre est inférieure à la vitesse de la roue ;
- Traction : il correspond à une condition dans laquelle la vitesse du mécanisme à roue libre est substantiellement égale à la vitesse de la roue de bicyclette ;
- Freinage : il correspond à une condition de freinage.

13. Procédé selon la revendication 12, dans lequel :
- l'étape c1) comprend l'identification de l'état de traction ;
- l'étape c2) comprend la sélection de la tendance d'une première partie associée à l'état de traction, ladite tendance comprenant :
• une première partie comprise entre une valeur nulle de la vitesse de la bicyclette et une valeur définie (v_{curr,max}), dans laquelle la première partie (i°_{cyclist}) du signal de commande nominale du moteur augmente graduellement de la valeur nulle à une valeur maximum (i_{boost,max}) ;
• une seconde partie comprise entre ladite valeur définie (V_{curr,max}) de la vitesse de la bicyclette et la valeur de vitesse d'inversion (vₗᵢₘᵢₜ), dans laquelle la première partie (i°_{cyclist}) du signal de commande nominale du moteur diminue graduellement jusqu'à ce qu'elle atteigne la valeur nulle ;
• une troisième partie comprise entre la valeur de vitesse d'inversion (vₗᵢₘᵢₜ) et une valeur de vitesse maximum (v_{rech,max}), dans laquelle la troisième partie (i°_{cyclist}) du signal de commande nominale du moteur est négative jusqu'à ce qu'elle atteigne ladite valeur minimum (i_{rec,min}) ;
• une quatrième partie supérieure à la valeur de vitesse maximum (V_{rech,max}), dans laquelle la quatrième partie (i°_{cyclist}) du signal de commande nominale du moteur est substantiellement égale à ladite valeur minimum (i_{rec,min}).

14. Procédé selon l'une quelconque des revendications de 10 à 13, dans lequel à l'étape d), la valeur actuelle du signal de commande corrigé du moteur (I°_{motor,corr}) est calculée :
- si la valeur de la première partie (i°_{cyclist}) du signal de commande nominale du moteur est positive, en mettant à l'échelle la première partie (i°_{cyclist}) du signal de commande nominale du moteur avec un troisième coefficient (µ⁺) dépendant de l'état de charge de la batterie, dans lequel le troisième coefficient (µ⁺) est égal à un pour des valeurs de l'état de charge étant supérieures à la valeur seuil (SoC°), tandis qu'il diminue vers la valeur nulle pour des valeurs inférieures à la valeur seuil (SoC°) jusqu'à ce qu'il devienne nul pour des valeurs petites et nulles de l'état de charge ;
- si la valeur de la première partie (i°_{cyclist}) du signal de commande nominale du moteur est négative, en mettant à l'échelle la première partie (i°_{cyclist}) du signal de commande nominale du moteur avec un quatrième coefficient (µ⁻) dépendant de l'état de charge de la batterie, dans lequel le quatrième coefficient (µ⁻) est égal à un pour des valeurs de l'état de charge étant inférieures à la valeur seuil (SoC°), tandis qu'il diminue vers la valeur nulle pour des valeurs supérieures à la valeur seuil (SoC°) jusqu'à ce qu'il atteigne la valeur nulle en correspondance de la valeur à pleine charge.

15. Programme informatique comprenant des parties de code de logiciel adaptées pour effectuer les étapes du procédé selon l'une quelconque des revendications de 10 à 14, lorsque ledit programme est exécuté sur au moins un ordinateur.
